# FASCICULE DE BREVET EUROPEEN

(11) **EP 1 012 792 B1**
(45) Date de publication et mention de la délivrance du brevet: **05.09.2007**
(21) Numéro de dépôt: 97911278.6
(22) Date de dépôt: 16.10.1997
(51) Int. Cl.: G07C 9/00, G07F 7/10, B42D 15/10

(54) **PROCEDE ET INSTALLATION POUR REALISER UN TITRE D'USAGER PERSONNALISE INFALSIFIABLE**
VERFAHREN UND EINRICHTUNG ZUM ERZEUGEN EINER UNFÄLSCHBAREN PERSONIFIZIERTEN TEILNEHMERKARTE
METHOD AND INSTALLATION FOR PRODUCING A PERSONALISED USER IDENTIFICATION CARD WHICH CANNOT BE FORGED

(30) Priorité: 17.10.1996 FR 9612923
(43) Date de publication de la demande: 28.06.2000
(73) Titulaire: Gkard S.A.S., 38100 Grenoble (FR)
(72) Inventeur: MORAINE, Michel, F-38610 Venon (FR)
(74) Mandataire: Jacquot, Ludovic R. G.
(86) Numéro de dépôt international: PCT/FR1997/001853
(87) Numéro de publication internationale: WO 1998/018106

(56) Documents cités:
- EP-A- 0 412 520
- EP-A- 0 428 233
- EP-A- 0 440 814
- EP-A- 0 706 150
- WO-A-82/01610
- WO-A-83/04092
- WO-A-93/19942
- FR-A- 2 665 812
- GB-A- 2 033 299
- US-A- 5 384 846

## Description

La présente invention concerne un procédé et une installation pour réaliser un titre d'usager personnalisé infalsifiable, autorisant un usage régi par une autorité, ledit titre étant constitué par une carte comportant une face munie d'une photographie du portrait de l'usager, et un support mémoire comportant au moins des informations relatives à l'usage.

L'invention vise en particulier la réalisation de cartes d'abonnement personnalisées fonctionnant avec ou sans contact (dites PSC) et permettant l'usage des transports en commun. Elle vise également la réalisation de cartes d'identité médicale dites cartes santé, ou de cartes qui sont renouvelées périodiquement telles les cartes bancaires.

De telles cartes qui comprennent des cartes à mémoire ou à puce, sont actuellement utilisées notamment comme support de document d'identité, de droit d'accès à un établissement et/ou à un service, ou comme carte d'abonnement. La photographie de l'usager est particulièrement utile pour contrôler rapidement que le porteur de la carte à puce est bien l'usager autorisé.

En général, le procédé de réalisation d'une carte comporte des étapes consistant à effectuer une prise de vue du portrait d'un usager, à saisir numériquement les données graphiques correspondantes, à saisir numériquement au moins les informations relatives à l'usage, à fournir une carte comportant une face et un support d'enregistrement, à personnaliser graphiquement ladite carte par impression graphique de ladite photographie sur la face de la carte à partir desdites données graphiques numériques, à personnaliser électriquement la carte en enregistrant lesdites informations numériques dans ledit support.

Un tel procédé offre l'avantage de pouvoir visualiser la prise de vue avant impression et se passe de support consommable tel une photographie tirée sur papier.

Il est actuellement mis en oeuvre dans une installation comportant des moyens de prise de vue et de saisie de données graphiques sous forme numérique, par exemple une caméra vidéo ou un appareil photographique numérique, des moyens de saisie de données alphanumériques tel un micro-ordinateur, et des moyens de transfert de l'ensemble de ces données sur la carte.

Les moyens de transfert graphique dits de personnalisation graphique comportent typiquement une imprimante sur plastique, tandis que les moyens de transfert des informations dits de personnalisation électrique comprennent des moyens aptes à enregistrer les données alphanumériques respectivement dans la puce.

De telles installations ont l'inconvénient d'être onéreuses et de mobiliser du personnel pendant longtemps à chaque réalisation de carte.

En outre, elles se trouvent généralement chez quelques entreprises privées dont l'activité est la personnalisation de cartes. Ces entreprises se trouvent généralement éloignées du lieu de fréquentation habituel de l'usager.

En conséquence, l'usager est contraint de se déplacer dans ces entreprises et de perdre du temps pour le déplacement auquel s'ajoute le temps nécessaire à la réalisation de la carte. Ces contraintes constituent un frein au développement des cartes personnalisées.

D'autre part, la généralisation de l'utilisation des cartes à puce et leur renouvellement entraînent des quantités élévées de cartes à réaliser dans un délai très court. Cela est impossible en ayant recours à l'installation existante ci-dessus.

L'invention vise à pallier les inconvénients ci-dessus de manière à favoriser le développement de ce type de carte.

On connaît, à titre d'exemple, le document EP 412 520 qui présente un procédé de réalisation de titre d'usager faisant appel à une prise de vue de données graphiques correspondant au visage de l'usager et à une saisie numérique relative à l'usage du titre sur un moyen de mémorisation du titre d'usager.

En conséquence, l'invention poursuit plusieurs objectifs cumulables ci-après.

D'une manière générale, l'objectif de l'invention est principalement de permettre une réalisation de la carte ci-dessus qui ne soit pas sujette à fraude pendant ou après sa réalisation et avec le minimum de contraintes pour l'usager.

L'invention vise également à permettre de produire facilement et rapidement un nombre élevé de cartes à' puce personnalisées.

L'invention vise également à réduire autant que possible les contraintes de l'autorité qui se traduisent notamment par des frais de mise en oeuvre.

A cet effet, l'invention a d'abord pour objet un procédé conforme à la revendication 1.

Grâce à ces dispositions, le procédé permet de réduire les contraintes de l'usager dans la réalisation de la carte, notamment de temps ou de déplacement. En effet, en étant dissociées des autres étapes, les étapes peuvent être réalisées n'importe quand, n'importe où, et par n'importe qui.

Ces dispositions permettent également à l'autorité d'empêcher qu'une personne non autorisée n'intervienne frauduleusement dans une étape quelconque de réalisation de la carte en se substituant au titulaire.

Selon une caractéristique préférée, au moins les étapes de prise de vue et de saisie numérique des données graphiques sont dissociées des étapes restantes, le procédé comprenant une étape selon laquelle on met au moins les données graphiques à disposition de l'autorité sous son contrôle direct ou indirect.

En dissociant ainsi les étapes du procédé, il est plus facile de le mettre en oeuvre. En outre, l'autorité conserve le contrôle de l'exploitation des données et par voie de conséquence également le contrôle de la réalisation de la carte puisque les données sont mises à sa disposition.

Selon un premier mode de mise en oeuvre, avec dissociation dans le temps, le procédé comprend les étapes suivantes selon lesquelles:
- on attribue une donnée d'identification aux données graphiques et/ou aux informations et on les saisit sous cette donnée de manière espacée dans le temps.
- on stocke au moins les données graphiques et on les rappelle par le biais de cette donnée d'identification pour la personnalisation de la carte.

Ainsi, dé telles caractéristiques libèrent l'usager des contraintes de temps puisque les saisies des données graphiques et/ou des informations peuvent être effectuées quand il le souhaite.

Elles libèrent pareillement l'autorité, celle-ci pouvant exploiter les données quand elle le souhaite simplement en les rappelant, celles-ci étant stockées à sa disposition.

Selon un deuxième mode de mise en oeuvre, avec dissociation dans l'espace, la prise de vue et la saisie numérique des données graphiques sont effectuées sur un premier site proche de l'usager tandis que les étapes restantes sont effectuées sur un deuxième site distinct du premier, et on transmet les données graphiques numériques à l'autorité.

En procédant ainsi, cette étape du procédé est à la base de la réduction des contraintes de déplacement de l'usager, le lieu d'exécution des saisies étant décentralisé.

Selon un troisième mode de mise en oeuvre avec dissociation dans le contrôle, au moins la prise de vue et la saisie numérique des données graphiques s'effectuent sous le contrôle de l'usager; cette prise de vue s'effectue de préférence en libre service.

En procédant ainsi, l'autorité peut se décharger de cette étape qui en général prend beaucoup de temps et ce sans nuire énormément à l'usager. En effet, cette étape est en général bienvenue chez l'usager car elle peut lui permettre de prendre des photographies à sa guise et de choisir cette qui lui convient.

En outre, cette caractéristique permet un gain de temps pour l'autorité dans la mesure où cette étape peut être effectuée en temps masqué par l'usager.

Selon une première variante de mise en oeuvre du procédé avec dissociation dans le temps, on effectue dans un premier temps, la saisie des informations et leur enregistrement sur une carte provisoire, et on réalise dans un deuxième temps, la saisie des données graphiques et leur impression sur la carte.

En procédant ainsi, on réduit considérablement les contraintes de temps pour l'usager tout en lui permettant d'utiliser sa carte immédiatement, la carte provisoire donnant le même droit qu'une carte définitive.

Selon une caractéristique préférée, le procédé comprend une étape selon laquelle l'autorité vérifie la conformité de la donnée d'identification pour autoriser au moins la saisie des données graphiques.

Ainsi, l'autorité, peut exercer un contrôle tant pour l'authentification de la carte que de l'usager, ou les deux à la fois. Pour cela la donnée est respectivement émise soit par l'autorité, soit par l'usager, ou soit par les deux à la fois.

Selon une autre caractéristique préférée, le procédé comprend une étape selon laquelle pour vérifier que le porteur est bien l'usager, au moins les données graphiques rappelées sont visualisées de manière à les comparer avec le visage de l'usager et on réalise une carte définitive en cas de conformité.

Grâce à cette étape, on exclut toute possibilité de fraude; l'autorité régissant l'usage, par exemple un employé d'un établissement de transport, peut visionner simultanément toutes les données à inscrire sur la carte à puce personnalisée et la photographie à imprimer et il peut comparer cette dernière avec l'usager qui se trouve devant lui avant de confectionner la carte à puce personnalisée et de la délivrer.

En alternative, l'autorité rappelle également le nom de l'usager et le compare à celui figurant sur sa carte d'identité.

Selon une autre caractéristique de l'invention, les étapes de personnalisation peuvent être effectuées en petite série à de.s endroits multiples décentralisés ou en grande série à un endroit centralisé.

Il est ainsi possible de réaliser des cartes en grande quantité et rapidement.

L'invention a également pour objet une installation permettant de mettre en oeuvre le procédé ci-dessus et comprenant:
- au moins une station de prise de vue comportant un moyen de saisie numérique de données graphiques correspondant au portrait de l'usager,
- au moins un moyen de saisie numérique des informations,
- au moins un moyen de stockage et de distribution de données,
- au moins un moyen d'impression pour personnaliser graphiquement ladite carte à partir desdites données graphiques numériques,
- au moins un moyen d'enregistrement pour enregistrer lesdites informations dans ledit support;
- au moins une unité centrale pour piloter ces moyens.

L'installation est caractérisée en ce qu'elle est apte à dissocier le fonctionnement / utilisation desdits moyens entre eux et à soumettre leur fonctionnement / utilisation à autorisation et/ou contrôle ultérieur de l'autorité.

Grâce à ces caractéristiques, l'installation est adaptée à mettre en oeuvre le procédé de l'invention en toute sécurité.

Selon une caractéristique préférée, elle est apte à dissocier le fonctionnement / utilisation des moyens de prise de vue et de saisie numérique de données graphiques des autres moyens, et à mettre les données graphiques obtenues à disposition de l'autorité.

Ces dispositions permettent une utilisation plus souple de l'installation.

Selon un premier mode de réalisation, l'installation est apte à attribuer une donnée d'identification aux données graphiques et/ou aux informations, à les stocker sous ladite donnée d'identification dans les moyens de stockage et de distribution, lesdits moyens de stockage étant sous le contrôle de l'autorité, et à les rappeler par l'intermédiaire de ladite donnée.

Cette installation est particulièrement bien adaptée pour dissocier le fonctionnement / utilisation des moyens dans le temps et réduire ainsi les contraintes de temps de l'usager et de l'autorité.

Selon un autre mode de réalisation, l'installation comporte une pluralité de stations de prise de vue décentralisées, chaque station étant apte à transmettre à distance au moins les données graphiques à au moins un moyen de stockage.

Ces dispositions permettent un fonctionnement /utilisation des moyens de saisie dissocié dans l'espace. Il est ainsi possible de saisir en même temps les données graphiques d'un grand nombre d'usagers sans qu'il y ait trop de contraintes de déplacement pour eux.

Selon un autre mode de réalisation, ladite station de prise de vue est adaptée à fonctionner en libre service sous le contrôle partiel de l'usager.

Grâce à ces dispositions, l'installation est particulièrement bien adaptée pour dissocier le fonctionnement / utilisation des moyens dans leur contrôle. En outre, l'aspect libre service autorise l'usager à utiliser la station de prise de vue quand il le souhaite. Cette caractéristique permet également à l'autorité de se décharger sur l'usager des aspects contraignants et onéreux de la prise de vue.

Selon une caractéristique avantageuse, l'installation peut être adaptée à un fonctionnement multicarte pour plusieurs autorités à la fois. A cet effet, elle comprend des moyens de sélection de la carte à obtenir ainsi que d'un mode fonctionnement correspondant.

Grâce à cette caractéristique, il est possible de tirer des revenus locatifs d*'*un parc existant de cabines qui serait adapté à plusieurs autorités ou de partager l*'*investissement entre plusieurs autorités. Cela permet d'atteindre l'objectif de l'invention relatif à la réduction des frais de mise en oeuvre du procédé.

Selon une autre caractéristique préférée, l'installation comporte en outre une pluralité de stations de personnalisation décentralisées montées en réseau entre elles, chaque station de personnalisation comportant:
- un moyen de saisie d'informations, un moyen de stockage et de distribution de données,
- une imprimante graphique pour imprimer les données graphiques sur ladite carte,
- un moyen d'enregistrement pour enregistrer lesdites informations dans ledit support,
- une interface de communication pour communiquer au moins avec une autre station de personnalisation,
- une unité centrale pour piloter ces moyens.

Grâce à ces caractéristiques, l'invention est particulièrement adaptée, d'une part à la saisie d'un grand nombre d'informations sans imposer de contraintes de temps et de lieu à l'usager et d'autre part, à la personnalisation d'un grand nombre de cartes très rapidement.

Selon une autre caractéristique préférée de l'invention, l'installation comporte en outre une station de personnalisation grande série.

Grâce à ces dispositions, cette installation est particulièrement bien adaptée à la réalisation d'un grand nombre de cartes en un temps très court comme par exemple pour une campagne de renouvellement de cartes.

D'autres caractéristiques et avantages de l'invention ressortiront de la description qui suit de plusieurs modes de mise en oeuvre et de réalisation de l'invention, donnés uniquement à titre d'exemple, en se référant aux dessins ci-annexés sur lesquels:
- les figures 1 à 4 sont des organigrammes illustrant les étapes de mise en oeuvre du procédé pour la réalisation d'une carte à puce personnalisée provisoire;
- l'organigramme de la figure 2 représente également les étapes d'un programme de fonctionnement d'une cabine de prise de vue en libre service pour la réalisation de la carte transport;
- l'organigramme de la figure 3 représente les étapes de la réalisation et de la remise du PSC définitif;
- la figure 4 est un organigramme des étapes mises en oeuvre pour la réalisation de cartes à puce personnalisées en grande série en usine;
- les figures 5 à 8 sont des organigrammes illustrant les étapes de mise en oeuvre du procédé par exemple pour la réalisation d'une carte santé.
- les organigrammes des figures 6 et 7 représentent également les étapes d'un programme de fonctionnement de la cabine de prise de vue pour la réalisation de la carte santé;
- la figure 8 représente une installation pour réaliser la carte santé notamment;
- la figure 9 représente une station de personnalisation grande série;
- la figure 10 représente plusieurs variantes d'installations pour la réalisation de la carte de transport;
- la figure 11 représente une station de personnalisation petite série équipant notamment des guichets d'un réseau de transport en commun;
- la figure 12 représente une vue en perspective d'une cabine de prise de vue automatique en libre service ;
- la figure 13 est un schéma de la cabine de prise de vue automatique en libre service de la figure 12 ;
- la figure 14 représente une installation générale conforme à un mode de réalisation préféré de l'invention.
- la figure 15 illustre une mémoire programme d'une station de personnalisation de type multicarte;
- la figure 16 illustre une mémoire programme d'une station de prise de vue de type multicarte;

Dans la description qui va suivre, on va décrire tout d'abord, le procédé de l'invention selon un mode de mise en oeuvre dans le cadre de la réalisation d'un titre de transport personnalisé autorisant l'accès à un réseau de transport en commun. Dans ce cas, l'autorité représente une société de transport en commun qui contrôle ou régit ce réseau ainsi que son usage par les usagers détenteurs d'un titre.

Le procédé de l'invention sera également décrit ultérieurement dans le cadre de la réalisation d'un titre personnalisé dit carte santé autorisant l'accès à des établissements de santé ou le bénéfice de prestations médicales, ou des remboursements de soins. Ces prestations et leur accès pour un assuré social dit usager, sont régies ou contrôlées par exemple par une caisse d'assurance sociale, dénommée l'autorité par la suite.

Selon l'invention, le titre d'usager personnalisé est constitué par une carte comportant une face munie d'une photographie du portrait de l'usager ou de l'assuré et un support mémoire comportant au moins des informations relatives à l'usage.

Le support mémoire peut être une piste magnétique, ou une puce électronique. La carte peut être du type sans contact ou avec contacts affleurants.

Pour réaliser cette carte, le procédé de l'invention comprend, des étapes consistant, à effectuer une prise de vue de données graphiques correspondant au visage de l'usager et à les saisir numériquement, puis à saisir numériquement au moins les informations relatives à l'usage, à fournir une carte comportant une face et un support d'enregistrement, à personnaliser graphiquement ladite carte par impression graphique de ladite photographie sur la face de la carte à partir desdites données graphiques numériques, à personnaliser électriquement la carte en enregistrant lesdites informations numériques dans ledit support.

Au sens de l'invention, on entend par personnalisation graphique, tout procédé permettant de reproduire une image sur une carte par exemple le visage de l'usager, à partir de données graphiques numériques, et dont le résultat est infalsifiable. Dans l'exemple, on utilise de préférence un procédé d'impression apte à imprimer ladite photographie sur une face de la carte en matière plastique. Pour cela, il est préférable de fournir une carte comportant une face vierge et exempte de traces de doigt.

Au sens de l'invention, on entend par personnalisation électrique de la carte, tout procédé consistant à enregistrer lesdites informations numériques dans ledit support, le mode d'enregistrement dépendant de la nature du support. Cela comprend notamment des enregistrements électriques dans une carte à puce, des enregistrements magnétiques dans le cas où le support est sous forme d'une piste magnétique.

La prise de vue et la saisie numérique des données graphiques sont préférentiellement dissociées des étapes restantes et le procédé comprend préférentiellement une étape selon laquelle on met au moins les données graphiques numériques à disposition de l'autorité sous son contrôle direct ou indirect..

Le terme « dissocié » doit être interprété au sens large comme indiqué ci-après. Dans l'état de la technique, les étapes sont généralement effectuées successivement et en moins d'un quart d'heure sous le contrôle d'une même personne représentant l'autorité et dans un même local.

Dans le terme « dissocié », on entend tout d'abord la dissociation temporelle des étapes ainsi que la dissociation dans l'espace. Mais, on entend également la dissociation dans leur contrôle.

Au sens de l'invention, les étapes ci-dessus sont dissociées dans le temps lorsque la durée séparant les saisies est supérieure à la durée nécessaire pour réaliser une carte personnalisée selon un procédé classique, la durée étant généralement de l'ordre de 5 à 10 minutes. En pratique, l'invention vise plusieurs heures, voire plusieurs jours espaçant au moins les étapes de prise de vue et/ou de saisie numérique de l'une au moins des étapes restantes.

Au sens de l'invention, les étapes ci-dessus sont dissociées dans l'espace lorsqu'elles sont effectuées dans des sites distincts, de préférence à des adresses différentes par exemple plusieurs quartiers d'une ville, ou plusieurs villes. Dans l'art antérieur, les saisies sont effectuées dans une même pièce.

Au sens de l'invention, il y a dissociation des étapes dans le contrôle lorsque le contrôle direct ou indirect des étapes est réparti entre plusieurs personnes. Dans l'invention, les étapes sont de préférence réparties ou dissociées dans leur contrôle entre l'usager et l'autorité. Le contrôle est indirect lorsqu'il est exercé par l'intermédiaire d'une société ou un matériel tel qu'une cabine de prise de vue automatique décrite infra.

Dans le cas de la dissociation dans le temps, la mise à disposition, peut quant à elle, consister à stocker les données ci-dessus, ou dans le cas de la dissociation dans l'espace, à les transférer et à les mémoriser au moins momentanément, l'accès aux données transférées et leur exploitation étant contrôlés par l'autorité.

La mise à disposition peut également consister à mémoriser les données au moins momentanément dans le cas d'une dissociation dans le contrôle; par exemple dans une installation autonome décrite infra, leur exploitation étant sous contrôle indirect de l'autorité dans la mesure où il s'effectue par l'intermédiaire de l'installation qui se substitue à l'autorité.

Selon le mode de dissociation temporelle, le procédé de l'invention comprend tout d'abord une étape consistant à attribuer une donnée d'identification aux données graphiques et/ou aux informations, et à les saisir de manière dissociée des autres étapes sous cette donnée d'identification, et ensuite une étape consistant à mettre à disposition directe ou indirecte de l'autorité au moins les données graphiques, et à les rappeler par le biais de cette donnée d'identification avant la personnalisation graphique et/ou électrique.

La donnée d'identification peut comprendre une donnée relative à l'usager telle son nom, prénom; elle peut comprendre une donnée relative également au système et à l'usager, par exemple un numéro de dossier, un numéro d'ordre, ou un numéro chronologique; la donnée d'identification peut comprendre également une donnée relative uniquement au système telle un numéro de guichet.

La donnée d'identification peut être émise par l'usager telle son nom, un code personnel arbitraire choisi par l'usager, tandis qu'elle peut être émise par l'autorité dans les autres cas, notamment par le biais d'une installation automatique décrite infra..

Les données graphiques et/ou informations sont mises à disposition sous cette donnée en étant stockées sous ou avec cette donnée.

On comprend que la donnée d'identification sert à identifier les fichiers, et/ou le guichet, et/ou l'usager, et/ou la carte en comportant un identifiant de chacun

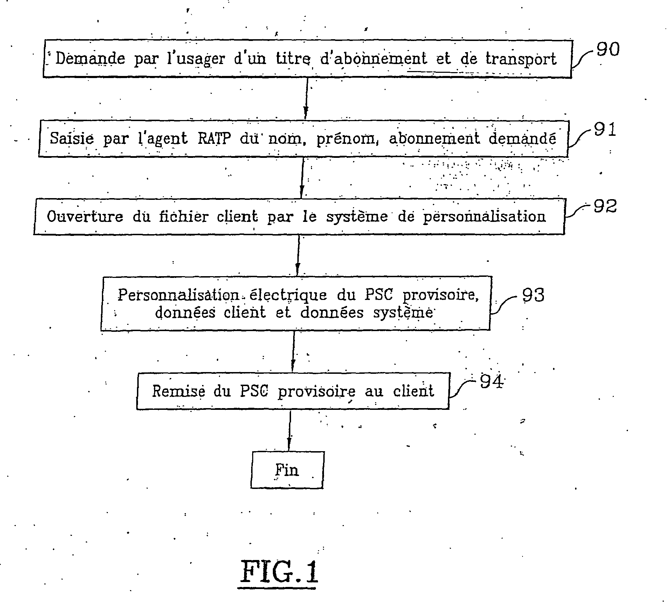

On va d'abord décrire le premier mode de dissociation des étapes (dissociation dans le temps) selon la première variante, et selon le troisième mode (dissociation du contrôle), en référence à un exemple illustré aux figures 1, 2, 3, 4.

Pour cela, un usager G souhaitant acquérir un titre de transport doit suivre le processus indiqué dans les cases 90 à 94 de la figure 1. Il doit d'abord se rendre dans une station de personnalisation décrite infra parmi un ensemble de stations, chaque station étant décentralisée et disposée par exemple à un guichet d'un réseau de transport en commun.

Sur la demande dé l'usager, on prépare un titre d'abonnement et de transport conformément à une caractéristique de la première variante préférée du procédé, selon laquelle,' dans un premier temps, on effectue la saisie des informations et leur enregistrement sur une carte provisoire, et dans un deuxième temps, on réalise la prise de vue et la saisie numérique des données graphiques et leur impression sur la carte.

Dans l'exemple, c'est l'agent en tant que représentant de l'autorité qui saisit des informations rotatives à l'usage. En l'occurrence, il s'agit d'informations sur l'abonnement (par exemple durée, parcours autorisé, fréquence) ainsi que le nom, prénom de l'usager. Les informations peuvent comprendre également une information relative à un droit à réaliser une photographie. Par ce biais, l'autorité exerce un contrôle sur l'utilisation des moyens de saisie de données graphiques décrits infra et évite ainsi une utilisation abusive.

Selon une caractéristique du procédé, on attribue un numéro d'identification aux données graphiques et/ou aux informations et on les saisit de manière dissociée sous ce numéro.

Dans l'exemple, la station représentant également l'autorité ouvre un fichier et lui attribue automatiquement un numéro qui fait partie de ladite donnée d'identification, en mettant en oeuvre des moyens programmables décrits infra.

En variante, la donnée d'identification peut comprendre un code personnel émis par l'autorité et porté à la connaissance de l'usager. Ce code personnel lui sera demandé ultérieurement pour être autorisé à faire la prise de vue. Par ce biais, l'autorité est assurée que la prise de vue est faite par une personne autorisée, en l'occurrence celle qui a payé les droits et qui a reçu le code personnel.

Ensuite, l'agent procède à l'enregistrement du fichier complet contenant les informations qu'il a saisies ainsi que les informations attribuées dans la puce d'une carte dite provisoire, réalisant ainsi sa personnalisation électrique. Les informations sont ensuite stockées en tant qu'archives.

Cette carte dite provisoire est remise au client. Elle donne les mêmes droits qu'une carte définitive sans avoir à attendre la mise en oeuvre des étapes correspondant à la personnalisation graphique. On utilise de manière avantageuse une carte du type sans contact dit PSC, celle-ci permettant à l'usager de passer rapidement des portes de contrôle d'accès.

Ensuite selon une caractéristique finale de la première variante du procédé visée précédemment, on réalise la prise de vue et la saisie numérique des données graphiques et leur impression sur la carte définitive.

Selon une autre caractéristique avec dissociation dans le contrôle, au moins la prise de vue et/ou la saisie numérique des données graphiques correspondantes sont effectuées sous le contrôle de l'usager.

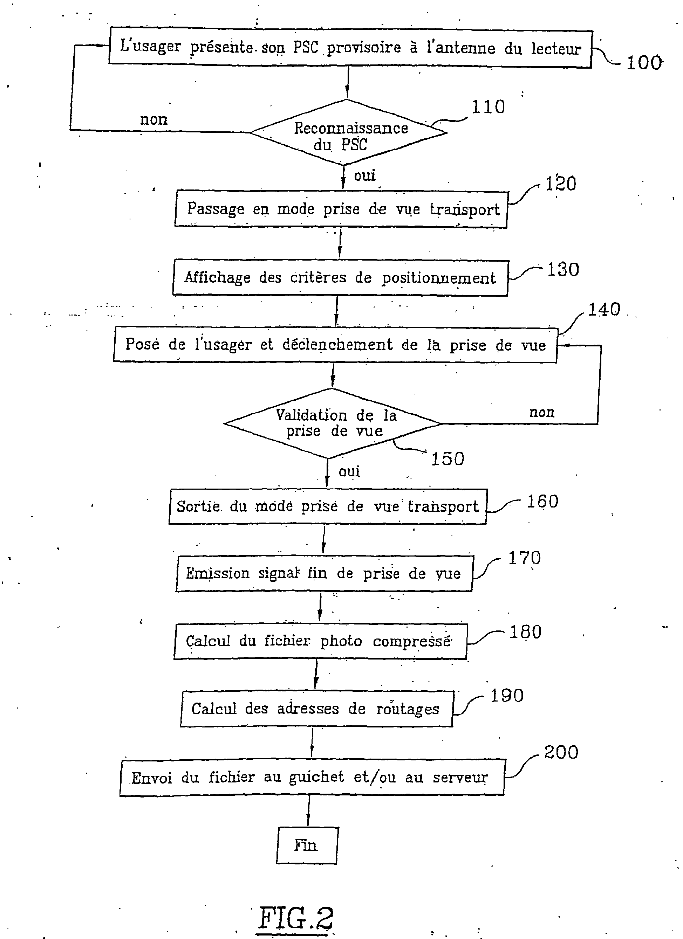

Il en résulte dans l'exemple que l'usager est invité à réaliser seul une prise de vue photographique, et à la saisir numériquement, sous son contrôle direct, dans l'une des cabines de prise de vue automatiques en libre service, telle que décrite également infra et fonctionnant selon un programme correspondant aux étapes illustrées à la figure 2.

Selon une autre caractéristique, le procédé comprend une étape selon laquelle on communique la donnée d'identification à l'autorité qui peut ainsi en vérifier la conformité avec la donnée préalablement archivée et autoriser la prise de vue et/ou la saisie des données graphiques.

Dans l'exemple, la donnée est communiquée automatiquement par une lecture de celle-ci sur la carte provisoire. Cela a l'avantage de reconnaître la carte et d'éviter des risques d'erreur dans la communication de cette donnée.

En variante, l'usager peut communiquer le code personnel à l'autorité via la cabine, lequel est comparé à celui enregistré dans la carte ou celui archivé. En cas de conformité, l'autorisation est donnée à l'usager. Cela a l'avantage de conforter la sécurité du système.

Selon une autre variante, l'autorisation peut être donnée également par lecture d'un droit à réaliser une prise de vue, préalablement enregistré dans la puce.

Selon une autre variante, l'agent peut remettre à l'usager un jeton avec ou sans carte provisoire, ledit jeton comportant des données d'identification, un droit à réaliser une photographie, et des indications de routage.

Dans l'exemple, le numéro de dossier et une donnée relative au guichet émetteur sont lus et comparés à ceux attribués par l'autorité et qui ont été préalablement stockés.

A l'achèvement de la prise de vue, et selon une caractéristique du procédé, les données graphiques sont dans l'exemple saisies sous le numéro de dossier qui constitue une donnée d'identification, et mises à disposition directe de l'autorité par exemple en étant transmises, soit au guichet émetteur, soit à un serveur accessible depuis le guichet émetteur, où elles sont stockées comme l'ont été les informations précédemment.

Selon une caractéristique avantageuse, le procédé peut comprendre une étape consistant à compresser les données graphiques préalablement à leur transfert à distance et leur stockage. Cela permet de réduire le coût de transmission en cas de sites éloignés et de diminuer l'espace mémoire nécessaire pour chaque photographie numérique.

En variante, les données graphiques peuvent être stockées dans la puce de la carte provisoire, de préférence sous forme compressée, la carte étant ensuite apportée par l'usager à l'autorité. Cela permet notamment d'économiser une transmission et de l'espace mémoire d'un serveur. Il est à noter que les cartes provisoires peuvent être récupérées et réutilisées pour un autre usager après effacement de leur contenu. A cet effet, elles peuvent avoir une capacité mémoire plus importante que les cartes définitives.

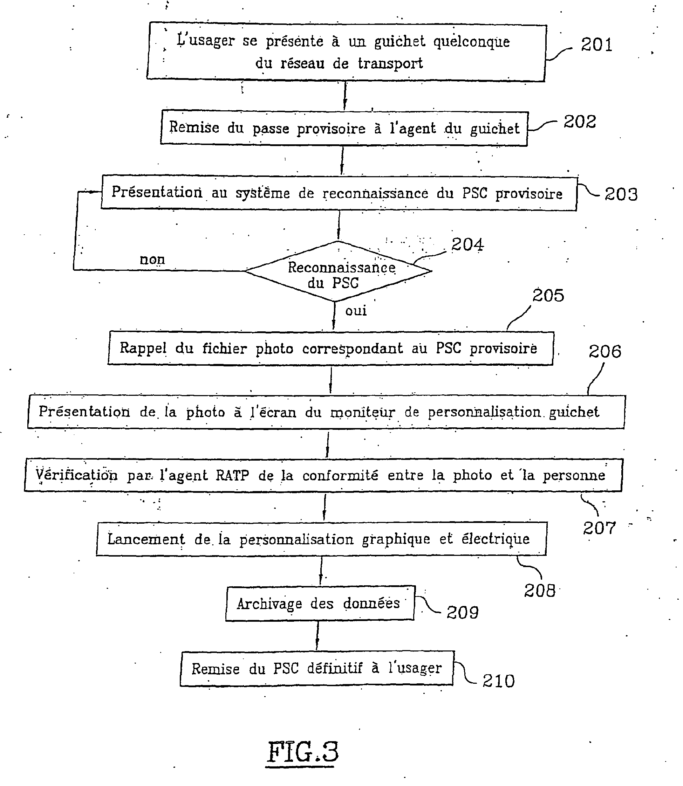

On va décrire maintenant, le retrait du PSC définitif en référence aux étapes 201 à 210 de l'organigramme de la figure 3.

L'usager doit se présenter au guichet émetteur du passe provisoire ou à un autre guichet apte à délivrer le passe définitif. Il remet ensuite le PSC provisoire à l'agent qui le présente à un système de reconnaissance compris dans la station de personnalisation décrite infra.

Selon une caractéristique du procédé, on rappelle au moins les données graphiques pour effectuer la personnalisation. Dans l'exemple, ce rappel s'effectue automatiquement à l'aide d'un programme dont les étapes essentielles sont décrites ci-après.

A l'étape 204, ce système lit le passe provisoire qui lui est présenté, reconnaît un numéro de fichier et à l'étape 205 rappelle le fichier correspondant contenu dans la carte provisoire ou transmis préalablement par la cabine de prise de vue automatique en libre service, ledit fichier étant mémorisé sur place au guichet ou dans un serveur.

Conformément à l'invention, le procédé peut comporter une étape consistant à visualiser au moins les données graphiques et à les comparer avec le visage de l'usager pour vérifier que le porteur est bien la personne qui a réalisé la photographie, avant de personnaliser la carte définitive.

En variante, l'agent peut vérifier la cohérence des données relatives à l'usager telles que son nom, en comparant le nom figurant sur la carte d'identité du porteur à celui qui est enregistré. Dans le cas où la donnée d'identification comporte un code personnel, l'agent peut demander au porteur de lui communiquer ce code. L'agent compare alors ce numéro à celui apparaissant sur le moniteur. Il est à noter que cette comparaison peut se faire automatiquement.

Dans l'exemple, le programme de rappel du fichier provoque à l'étape 205 la présentation du visage de l'usager sur un moniteur à disposition de l'agent.

En cas de conformité constatée par l'agent, celui-ci lance la personnalisation graphique et électrique, archive éventuellement les données dans la mémoire d'un ordinateur central par exemple, remet le passe définitif à l'usager.

Le procédé pour la personnalisation d'un titre de transport est alors terminé.

Selon un mode de dissociation dans le contrôle particulièrement avantageux l'ensemble des étapes de saisie peut s'effectuer en libre service automatiquement sous le contrôle direct de l'usager, l'autorisation étant dans ce cas conditionnée à un paiement, tandis que la personnalisation graphique et électrique s'effectue sous le contrôle indirect de l'autorité par l'intermédiaire de la cabine. Le cas échéant, les données peuvent également être transférées à l'autorité pour archivage afin de permettre une campagne de personnalisation ultérieure.

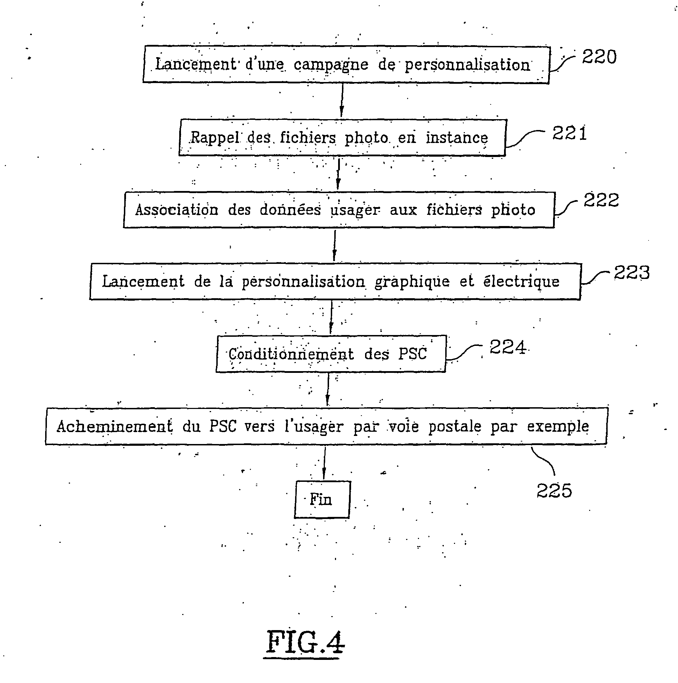

Selon un exemple de dissociation dans le temps, dans l'espace et dans le contrôle permettant une campagne de personnalisation, notamment pour un renouvellement de carte, on réalise dans un premier temps la saisie des données graphiques sous ladite donnée d'identification, sur un premier site et sous le contrôle indirect de l'usager (chez un photographe par exemple) que l'on transfère à l'autorité pour stockage, puis dans un deuxième temps, l'autorité effectue la saisie des informations sous ladite donnée d'identification, sur un deuxième site, et on réalise dans un troisième temps l'impression et l'enregistrement sous le contrôle de l'autorité et sur éventuellement un troisième site. Une telle campagne est décrire infra en référence à la figure 4 décrite infra.

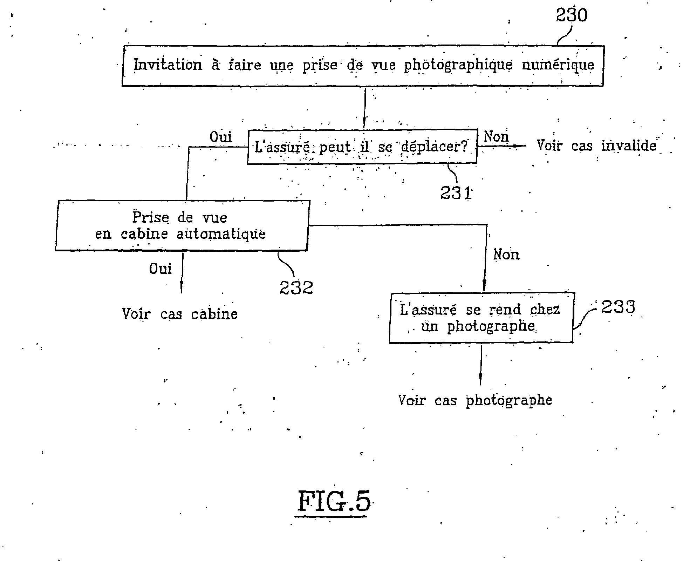

On va décrire maintenant le procédé de l'invention suivant un mode de mise en oeuvre tel qu'il est utilisé dans la réalisation de la carte santé, en référence aux figures 5 à 7.

Le procédé est mis en oeuvre dans cette application avec dissociation dans l'espace et dans le temps selon la deuxième variante préférée.

On rappelle que selon l'invention au moins la prise de vue de données graphiques et/ou leur saisie numérique est dissociée des étapes restantes.

Dans l'exemple, ce sont la prise de vue et la saisie numérique que l'on dissocie dans le temps et dans l'espace des étapes restantes.

Pour cela, l'autorité représentée par exemple par une caisse d'assurance maladie, doit saisir de son côté des données sur l'assuré qui sont déjà en sa possession, ou qu'elle devra élaborer afin qu'elles soient utilisables ultérieurement pour la personnalisation de la carte. Ce sont par exemple le numéro d'assuré social, les données relatives à l'assuré, et un droit à des prestations.

Ensuite, le numéro d'assuré social ou un jeton donnant droit à une prise de vue est fourni à l'assuré pour lui permettre de réaliser sa photographie.

Différentes possibilités illustrées à l'organigramme de la figure 5 lui sont offertes. Il peut réaliser la prise de vue et la saisie numérique des données graphiques sous le contrôle de l'un des photographes agréés par l'autorité et installés de manière décentralisée, ce qui constitue un contrôle indirect de l'autorité sur cette étape.

Il peut également la réaliser seul dans l'une des cabines automatiques décentralisées décrite infra sous le contrôle indirect de l'autorité par l'intermédiaire de la cabine.

Dans le cas où il ne peut pas se déplacer (cas d'un invalide), la prise de vue et/ou la saisie peuvent être réalisées comme expliqué infra.

Comme dans l'exemple précédent, la réalisation de la carte santé comprend une étape selon laquelle, on communique une donnée d'identification à l'autorité qui autorise la prise de vue et/ou la saisie après avoir vérifié sa conformité avec la donnée saisie par elle initialement.

Dans ce cas, il s'agit du numéro d'assuré social et éventuellement le nom de l'assuré. Cette étape permet d'authentifier l'assuré social et lui donne le droit d'intervenir dans les étapes de mise en oeuvre du procédé, notamment d'avoir sa photographie saisie.

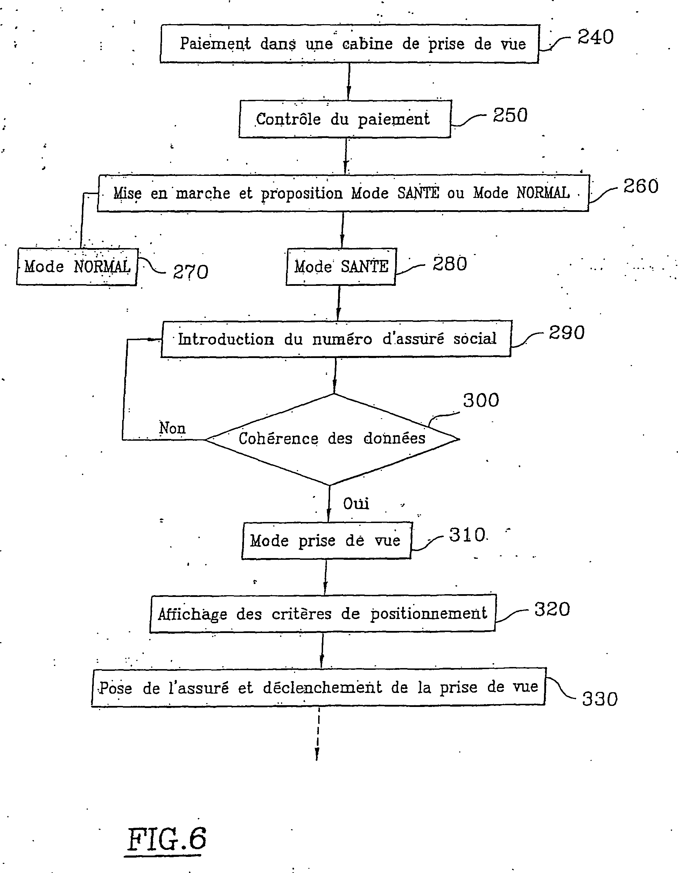

Ensuite, la prise de vue et la saisie numérique sont effectuées selon les cas ci-dessus en mettant l'équipement de la cabine (figure 6) en fonctionnement. Ce fonctionnement est décrit infra.

Ensuite, conformément à une caractéristique de l'invention, les données graphiques numériques saisies sont mises à disposition de l'autorité en étant transférées à distance, puis stockées dans un espace mémoire d'un ordinateur central ou un serveur dont l'accès est réservé à l'autorité ou une société agissant pour son compte.

Conformément à une caractéristique, le procédé comprend de préférence une étape préalable au transfert et au stockage consistant à compresser les données graphiques saisies, cette étape étant recommandée pour réduire les frais de transmission et l'espace mémoire nécessaires, sachant que dans ce cas, les sites de saisie et de mise à disposition sont nécessairement éloignés, et sachant qu'il s'agit de stocker un grand nombre de données graphiques exigeant beaucoup d'espace mémoire.

Ensuite, conformément à un mode de mise en oeuvre du procédé avec dissociation dans le temps, l'autorité rappelle les informations et les données graphiques numériques par l'intermédiaire de ladite donnée d'identification, pour réaliser la personnalisation graphique et électrique.

Cela a pour effet d'associer ensemble les données graphiques aux informations, celles-ci ayant été saisies de manière dissociée dans le temps et dans l'espace.

La personnalisation peut être réalisée en petite série au fur et à mesure ou en grande série.

Les données graphiques peuvent être transmises ensuite à l'autorité depuis son équipement fixe.

La saisie numérique peut également s'effectuer par scannérisation à partir d'une prise de vue photographique ou d'un négatif constituant des données graphiques non numériques, lesquelles sont fournies par l'assuré social.

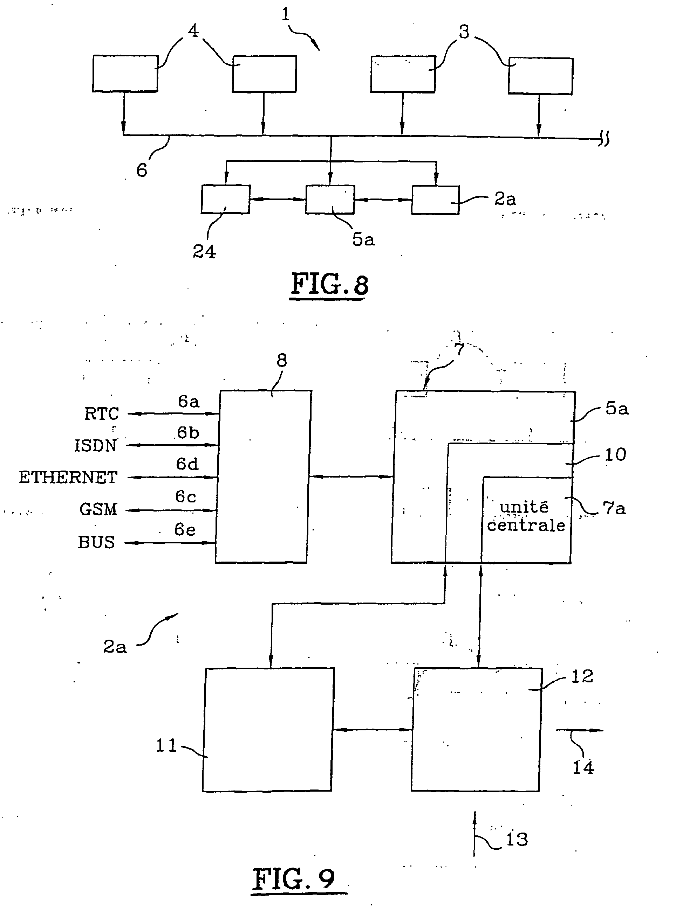

On va décrire maintenant, les différents moyens aptes à mettre en oeuvre le procédé de l'invention en référence aux figures 8 à 14.

Selon un mode de réalisation, on décrit tout d'abord à la figure 8, une installation 1 utilisable pour réaliser notamment la carte santé. Elle comprend au moins une station de personnalisation dite grande série 2a et une pluralité de stations de prise de vue décentralisées manuelles 3 (chez un photographe), ou automatiques 4, et un moyen de stockage et de distribution de données 5a.

Chaque station de prise de vue dispose d'une liaison de communication 6 avec le moyen. 5a de stockage et de distribution de données graphiques, par exemple un serveur, de manière à pouvoir transmettre les données graphiques et le .. cas échéant recevoir un signal d'autorisation de la prise de vue. Cette liaison peut être faite également avec l'unité mémoire 5a d'un ordinateur central 7 de la station de personnalisation grande série 2a. Cette liaison est de préférence toute liaison de télécommunication.

En variante, l'installation peut comporter le cas échéant également une station de personnalisation petite série 24.

Selon l'invention, la station de personnalisation 2a comporte au moins un moyen de saisie 10 pour saisir lesdites informations numériquement, au moins une imprimante graphique 11 pour personnaliser graphiquement ladite carte à partir desdites données graphiques numériques, au moins un moyen d'enregistrement 12, pour enregistrer lesdites informations dans ledit support, au moins une unité centrale 7a pour piloter ces moyens.

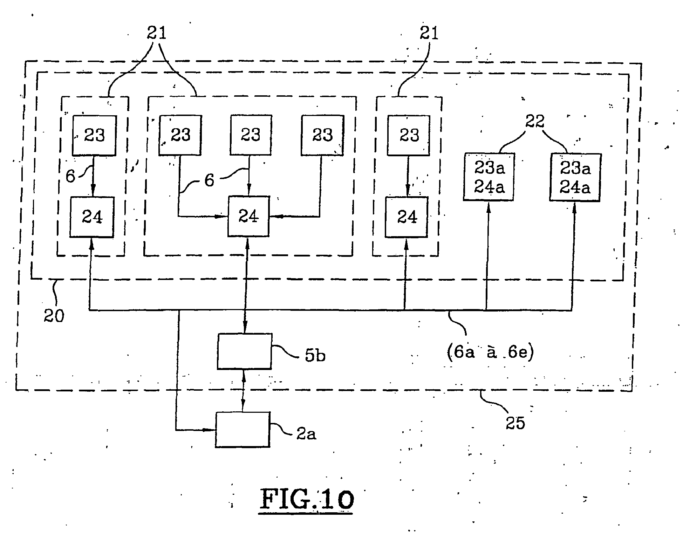

Dans l'exemple, illustré schématiquement à la figure 10, la station de personnalisation grande série 2a est disposée par exemple chez un fabriquant de cartes agrée par l'autorité. Elle comporte une interface de communication 8 avec différents réseaux de télécommunication 6a à 6e, un ordinateur 7 comportant une unité centrale 7a, une unité mémoire 5a, un clavier 10, et les moyens de personnalisation 11, 12. Le moyen 12 d'enregistrement dans la puce de la carte englobe tout moyen connu de l'homme de l'art apte à enregistrer des données dans une puce électronique dans le cas d'une carte à puce, ou un moyen connu de l'homme de l'art apte à magnétiser une piste magnétique dans le cas d'une carte à piste magnétique. Un dispositif d'alimentation en cartes et un dispositif de délivrance schématisé respectivement par les flèches 13, 14, sont également prévus.

Selon l'invention, chaque station de prise de vue est apte à saisir numériquement une prise de vue de données graphiques correspondant au visage de l'usager, à saisir une donnée d'identification pour les données graphiques et/ou lesdites informations, à transférer à distance les données graphiques pour stockage dans au moins ledit moyen de stockage et de distribution de données.

Dans l'exemple, ces stations sont disposées chez des photographes qui opèrent manuellement et dans des cabines automatiques en libre service disposées notamment dans des zones commerçantes. Ces cabines sont décrites ultérieurement.

On va décrire maintenant une installation apte à être utilisée notamment pour la réalisation de la carte transport à l'appui de la figure 10.

Selon un autre mode de réalisation de l'invention, on dispose une pluralité 20 d'installations autonomes 21, 22 décentralisées sur le réseau de transport en commun.

Chaque installation comporte au moins une station de prise de vue 23 reliée par une liaison de communication 25 à une station de personnalisation 24 dit de petite série pour transmettre au moins les données graphiques. Les stations 23, 24 peuvent être séparées ou réunies ensemble dans une cabine automatique 22.

Chaque station de prise de vue est dans cet exemple disposé à proximité du guichet où se trouve la station de personnalisation correspondante.

La liaison de communication 25 peut être de nature vidéo les données étant numérisées au guichet; Dans l'exemple, elle est informatique, les données graphiques étant de préférence numérisées dans la station de prise de vue.

On va décrire maintenant une installation autonome et unitaire 21 pour la réalisation d'un titre d'usager personnalisé infalsifiable.

Selon l'invention, une telle installation autonome et unitaire comprend au moins une station de prise de vue comportant un moyen de saisie numérique de données graphiques, au moins un moyen dé saisie numérique des informations, au moins un moyen de stockage et de distribution de données, au moins une imprimante graphique pour personnaliser graphiquement ladite carte à partir desdites données graphiques numériques, au moins un moyen d'enregistrement pour enregistrer lesdites informations dans ledit support, au moins une unité centrale pour piloter ces moyens.

Selon l'invention, cette installation est adaptée pour dissocier au moins la prise de vue et la saisie numérique de données graphiques des étapes restantes du procédé ci-dessus; et elle est également apte à mettre les données graphiques à disposition de l'autorité.

Dans cet exemple, et conformément à un mode de dissociation dans le contrôle, les moyens de prise de vue sont à disposition de l'usager et sous son contrôle dans des stations de prise de vue constituées par des cabines 23 disposées en libre service, tandis que les autres moyens sont disposés au guichet dans une station de personnalisation 24 à disposition de l'agent représentant l'autorité. Ainsi, dès que la prise de vue est effectuée, la cabine est apte à transmettre les données graphiques à la station de personnalisation via ladite liaison 6. De préférence ces données sont mémorisées momentanément à leur réception dans une unité mémoire (mémoire tampon) de la station par exemple jusqu'à ce qu'une prochaine prise de vue soit autorisée et reçue.

Dans le cas d'une cabine autonome 22, la station de prise de vue 23a et de personnalisation 24a étant réunies ensemble, la carte peut être réalisée immédiatement sur place si l'usager le souhaite. Dans ce cas, nous avons une dissociation dans leur contrôle comme ci-après.

Les moyens de prise de vue et de saisie numérique des données graphiques et des informations sont en libre service sous le contrôle de l'usager, celui-ci exerçcant son contrôlé en pouvant refuser la prise de vue; tandis que l'autorité contrôle indirectement, par le biais de la cabine, l'autorisation de la prise de vue (qui peut être par exemple soumise à une condition de paiement, ou à la communication d'un code secret personnel), la saisie des informations par le biais d'un menu offrant un choix d'informations préétablies, et la personnalisation graphique et électrique.

Ainsi, dès la prise de vue, les données sont saisies automatiquement, c'est à dire mémorisées momentanément, par exemple jusqu'à effacement par de nouvelles données graphiques, et transférées par connexion informatique interne de la cabine au moyen de personnalisation interne 24a.

A la figure 10, on voit une installation générale 25 en variante améliorée constituée par une pluralité d'installations unitaires. Dans ce cas, les stations de personnalisation 24, 24a sont montées en réseau entre elles par le biais d'une liaison de communication (6a à 6e) de sorte que cela leur permet d'échanger des données entre elles.

Grâce à cela, il peut y avoir une dissociation des étapes dans l'espace et dans le temps à condition toutefois selon l'invention, que chaque installation soit apte à attribuer une donnée d'identification aux données graphiques et/ou aux informations, et à les stocker dans les moyens de stockage et de distribution sous ladite donnée d'identification; l'accès aux moyens de stockage étant réservé à l'autorité, et à les rappeler par l'intermédiaire de ladite donnée.

Dans le cas de cabines autonomes, l'installation générale délivre un code personnel à l'usager en cas de dissociation des étapes. La reprise ultérieure des étapes, suite par exemple à une interruption volontaire de l'usager par manque de temps, est conditionnée par la communication ce code personnel, la cabine effectuant un test de conformité du code reçu avec celui stocké en mémoire de la carte ou en mémoire du système.

En variante encore améliorée, l'installation générale peut comporter également un ordinateur central commun ou un serveur commun 5b monté en réseau avec les stations de personnalisation et/ou avec les stations de prise de vue et également une station de personnalisation grande série 2a qui peut être reliée soit au réseau 25 et/ou soit au serveur 5b. Cette installation est adaptée pour effectuer une campagne de renouvellement de carte.

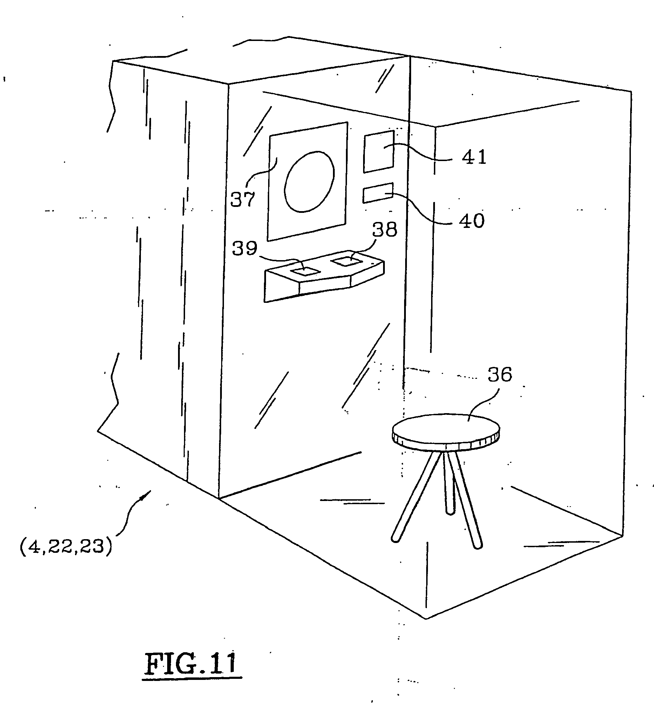

On va décrire maintenant une station de personnalisation petite série telle qu'elle existe au guichet à l'appui de la figure 11.

Selon une caractéristique de l'invention, chaque station de personnalisation de petite série 24 comporte un moyen de saisie d'informations 31, 32, 33, un moyen de stockage et de distribution de données, des moyens d'impression, un moyen d'enregistrement 30 pour enregistrer lesdites informations dans ledit support, une unité centrale 31 pour piloter ces moyens.

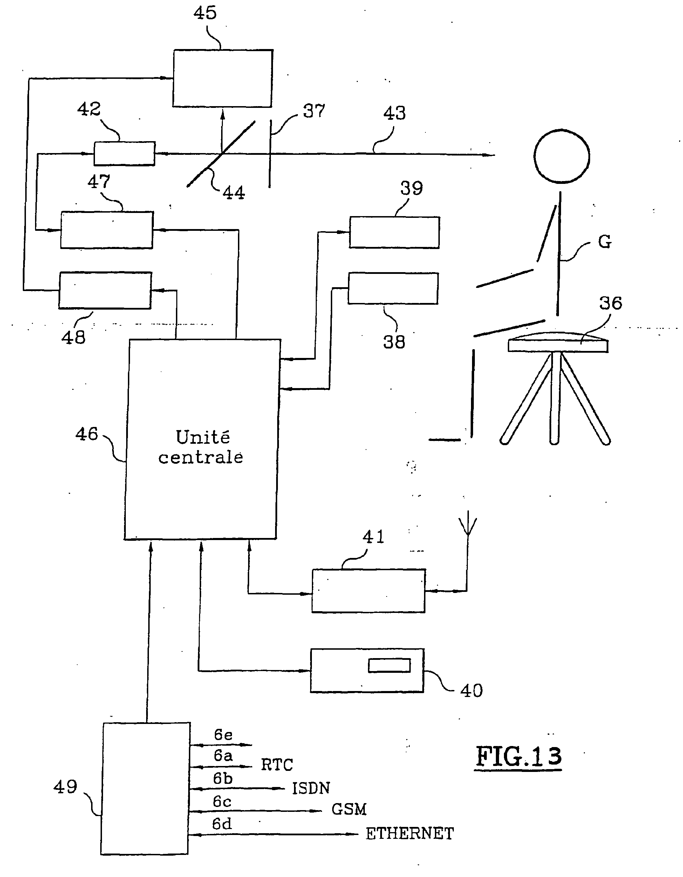

Dans l'exemple, la station de personnalisation illustrée à la figure 13 comporte une imprimante graphique 29, une interface de personnalisation électrique 30, un micro-ordinateur 32 comportant un clavier 33, et une unité centrale 31, un moyen de stockage étant par exemple constitué d'une unité mémoire 5c du micro-ordinateur. Elle comporte également et avantageusement au moins une interface de communication à distance pour transmettre sur différents réseaux : 6a à 6e par exemple RTC, ISN, ETHERNET, GSM ou autre tel un bus informatique.

Conformément à une autre caractéristique, la station de personnalisation petite série comporte également un moniteur 34 pour visualiser les données graphiques.

Conformément à une autre caractéristique, la station de personnalisation petite série comporte également un lecteur de carte 26, 27. Elle peut comporter également deux types de lecteur de carte à puce 26, 27 avec et sans contact. Ces lecteurs servent notamment à lire la donnée d'identification qui permettra d'associer les données graphiques aux données d'enregistrement.

Avantageusement, chaque station de prise de vue 23 comporte également des moyens de compression de données 35.

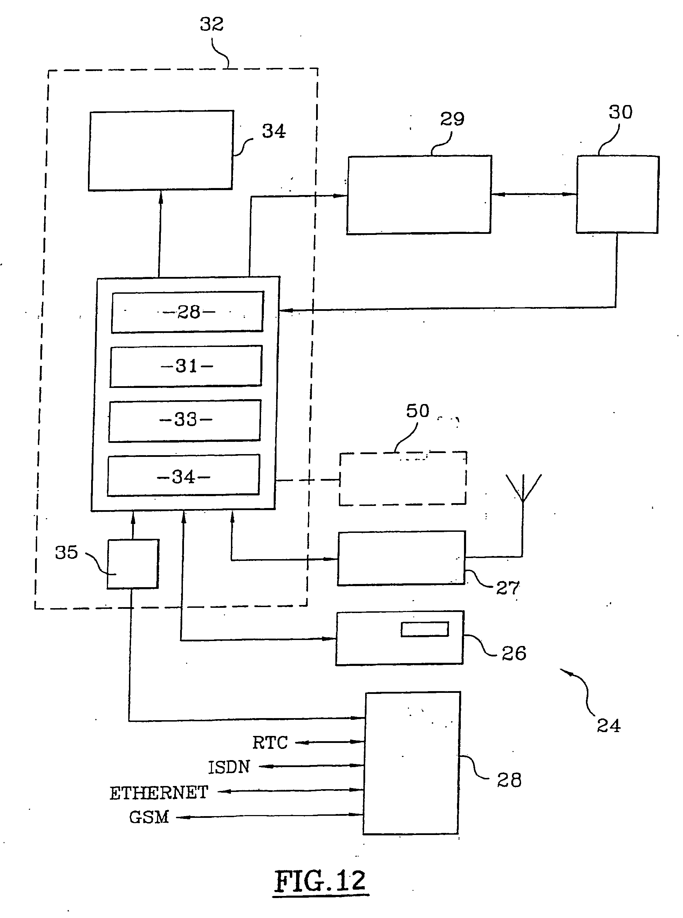

On décrit maintenant chaque cabine de prise de vue conforme à l'invention à l'appui de la figure 12.

Chaque station de prise de vue comporte au moins les moyens de la station de prise de vue décrite précédemment dans l'application carte santé.

Dans l'exemple, la station de prise de vue 23 est disposée dans une cabine automatique 22 du type décrit dans la demande de brevet français No. 92 04041 du 30 mars 1992. Comme schématisée sur la figure 12, elle comporte un siège 36 sur lequel s'assoit l'usager de manière à faire face à une glace 37 disposée dans une paroi de la cabine. Cette cabine comporte un panneau de commande comprenant un clavier numérique 38 et un clavier de navigation 39 ou tout moyen d'entrée de données équivalent. La cabine est également équipée d'un lecteur de carte à puce 40 et d'une antenne 41 de lecture sans contact du passe.

La figure 13 est un schéma synoptique de l'équipement de cette cabine.

On retrouve le siège 36 sur lequel l'usager G est assis avec son visage au niveau de la glace derrière laquelle se trouve une caméra numérique 42 dont l'axe optique 43 est horizontal et dirigé vers le visage de l'usager. Un miroir semi-réfléchissant 44 est disposé à 45° sur cet axe optique 43 de manière à projeter sur la glace 18 une image fournie par un moniteur 45 qui visualise l'image prise par la caméra 42.

Un ordinateur 46 gère la caméra 42, le moniteur 45, -le clavier numérique 38, le clavier de navigation 39, une carte de numérisation 47, une carte vidéo 48, le lecteur de carte à puce avec contact 40, le lecteur de carte à puce sans contact 41 et une interface de transmission de données 49 reliée à un réseau 6a à 6e.

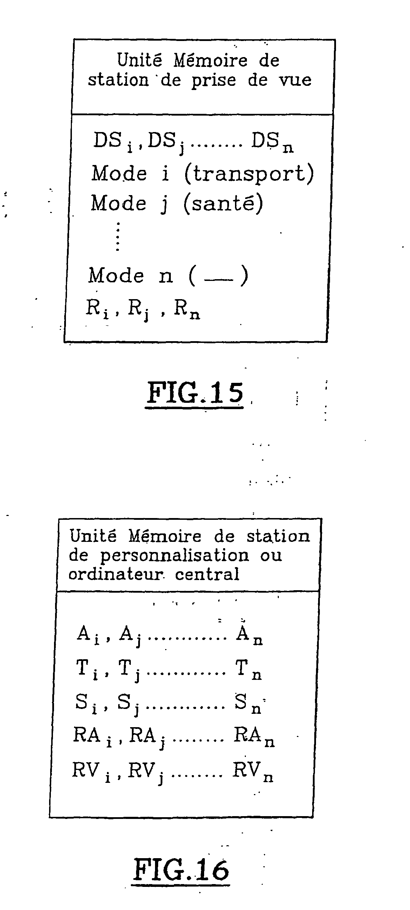

Cette cabine est adaptée à la mise en oeuvre du procédé selon l'invention. Les éléments spécifiques à l'invention sont notamment les deux lecteurs 40 et 41, l'interface de transmission de données 49, le cas échéant un moyen 35 de compression de données graphiques, et un logiciel de fonctionnement chargé dans une mémoire programme de l'ordinateur 46, illustrée à la figure 15.

Selon un mode de réalisation, une mémoire de l'unité centrale de chaque station de personnalisation ou l'ordinateur central commun à la pluralité de station peut comporter un programme de calcul Ai, apte sur commande à attribuer une donnée d'identification pour chaque usager et de l'associer aux données graphiques et/ou aux informations pour la saisie. Il peut s'agir par exemple de tout programme d'attribution d'un numéro d'ordre de type connu.

Un tel programme est nécessaire notamment pour l'attribution d*'*un numéro d'ordre qui tiennent compte de l'ensemble des fichiers créés.

L'unité centrale ou l'ordinateur central commun comporte également et de préférence, au moins un programme de contrôle apte à vérifier par un test (Ti), la conformité de la donnée d'identification et autoriser et/ou déclencher la prise de vue et/ou la saisie des données graphiques par exemple par émission d'un signal (Si) d'autorisation et/ou de déclenchement, au moins un programme de rappel (Ri) des données graphiques et/ou des informations par le biais de ladite donnée d'identification, un programme de rappel (RVi) comportant une étape consistant à visualiser au moins les données graphiques sur le moniteur. Tous ces programmes pris isolément sont de type connu.

Selon une caractéristique, les cabines peuvent comporter un dispositif de déclenchement apte à déclencher un mode spécifique de fonctionnement tel que décrit infra.

Un tel dispositif peut être constitué par un dispositif mécanique, ou électrique ou un programme (DSi) apte à détecter un signal de validation émis par une carte à puce ou émis par un ordinateur central mettant en oeuvre le test (Ti) de reconnaissance de données.

Dans l'exemple on a recours au programme (Dsi) de type connu décrit infra en référence aux organigrammes.

Selon une variante avantageuse, l'installation générale 25 de la figure 10 peut comporter également une station de personnalisation grande série 2a en liaison de communication avec ledit serveur ou l'ordinateur central. Ainsi, il est possible d'effectuer une campagne de personnalisation rapidement.

Chaque station de personnalisation petite série ou de prise de vue peut comporter un « scanner » 50 apte à saisir une prise de vue tirée sur un négatif ou du papier photographique.

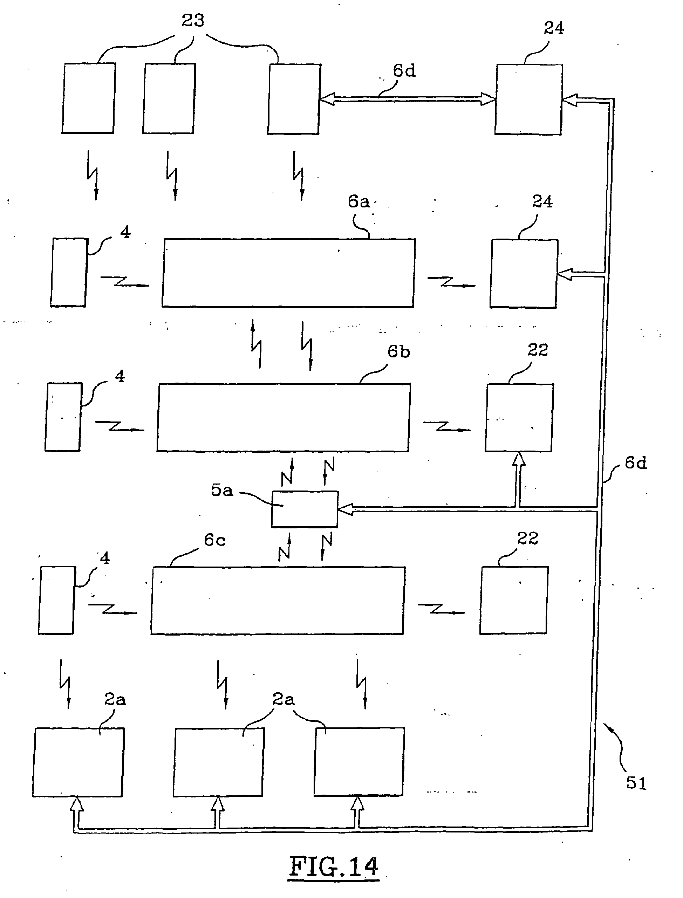

La figure 14 illustre un mode de réalisation préféré d'une installation générale 51 comportant l'ensemble des moyens décrits précédemment et permettant la réalisation de tout type de carte (santé, bancaire, transport...). Ces moyens peuvent communiquer entre eux par l'intermédiaire d'un ou plusieurs réseaux de télécommunication 6a à 6e.

Grâce à la pluralité des stations de prise de vue disposés près de l'usager en libre service 22 et/ou semi-libre service 23 près du guichet de délivrance de carte ou tout autre endroit public, et des stations de personnalisation 22, 24 réparties également près du client selon deux modes de réalisation, où bien centralisées chez un fabricant 2a selon un autre mode de réalisation, lesdits moyens de personnalisation 2a, 24, 24a étant montés en réseau ensemble et/ou reliés à un ordinateur central 5a, il est possible de réaliser rapidement un nombre important de cartes personnalisées par exemple 5 millions, avec le minimum de contrainte de lieu et de temps pour l'usager tout en lui permettant de choisir sa photographie.

En outre, cette installation permet d'éviter d'avoir des frais de tirage de la photographie sur du papier, ou toute manipulation de photographie sur papier et erreurs résultantes.

L'usager peut obtenir un titre de transport à n'importe quel guichet; il peut faire sa photographie à n'importe quelle cabine de prise de vue automatique ou semi-automatique.

Dans le cas d'un titre provisoire, il peut également l'obtenir à n'importe quel guichet et retirer son titre définitif à n'importe quel guichet même distinct de celui qui a émis le titre provisoire.

Avantageusement, chaque station de personnalisation ne peut démarrer qu'après lecture d'une carte d'autorisation détenue par l'agent du réseau de transports assortie éventuellement d'une procédure d'authentification de l'agent, de type connu et disposé dans l'unité mémoire d'une unité centrale.

On va décrire maintenant le fonctionnement de la cabine de prise de vue automatique qui utilise un programme illustré à l'organigramme de la figuré 2.

Pour initialiser le programme, à l'étape 100, l'usager présente son PSC provisoire aux moyens de lecture 41 de la cabine 22, 23 décrite supra.

A l'étape 110, on procède à la reconnaissance du PSC; pour cela, le lecteur lit les informations et l'ordinateur 46 vérifie parmi .ces informations la présence d'un droit à effectuer une photographie, par exemple une information codée. En cas d'absence de droit, le programme se boucle sur l'étape initiale, et en cas de présence, il se branche à l'étape 120.

A cette étape, le programme fait passer la cabine dans un mode de fonctionnement spécifique à l'application, par exemple dans ce cas, un mode transport et se branche à l'étape 130.

Ce mode n'offre qu'un format de prise de vue unique par opposition au mode normal de la cabine où de nombreuses options sont offertes (photographie d'amusement, photographies multiples, formats multiples, noir et blanc ou couleurs, etc..).

On peut prévoir que l'usager paie l'usage de la cabine de prise de vue automatique en libre service. Le paiement de la prise de vue peut également s'effectuer en même temps que le paiement de l'abonnement, lors de l'établissement du passe provisoire. On peut aussi payer la prise de vue par exemple au moyen d'un jeton fourni avec le passe provisoire par l'agent au guichet.

Ensuite, on voit sur l'organigramme que l'usager est guidé par un logiciel propre à la prise dé vue conformément aux étapes 130 à 150. Selon ces étapes successives, le logiciel affiche les critères de positionnement, invite l'usager à se positionner correctement et à poser pour la prise de vue, à utiliser le clavier de navigation 39 et à appuyer sur un bouton de déclenchement de la prise de vue quand il est prêt.

La photographie prise est montrée sur la glace 37 à l'usager au moyen du moniteur 45 et du miroir 44 et le programme lui donne le choix de refaire une autre prise de vue si la photographie ne lui convient selon une boucle entres l'étape 140 et 150. Lorsque la photographie lui convient et que l'usager valide la prise de vue à l'étape 150 (branche oui), le programme se branche à l'étape 160.

A cette étape, le programme fait sortir la cabine du mode transport, et transmet un signal de fin de prise de vue à l'usager selon l'étape 170.

Le programme comprend de préférence, à l'étape 180, un sous programme C selon lequel, les données sont compressées et associées à des informations d'identification lues sur le passe provisoire au cours de sa présentation ; il se branche ensuite à l'étape 190.

A cette étape, le programme calcule des adresses de routage et se branche à l'étape 200.

A cette étape, le programme transmet le fichier par l'interface de transmission de données 49 à la station de personnalisation du guichet émetteur du PSC ou à un serveur spécialisé sous contrôle de la société de transport.

La saisie des données de portrait à l'aide de la cabine de prise de vue est alors terminée, celle-ci ayant été effectuée conformément à l'invention partiellement sous le contrôle direct de l'usager et partiellement sous celui de l'autorité.

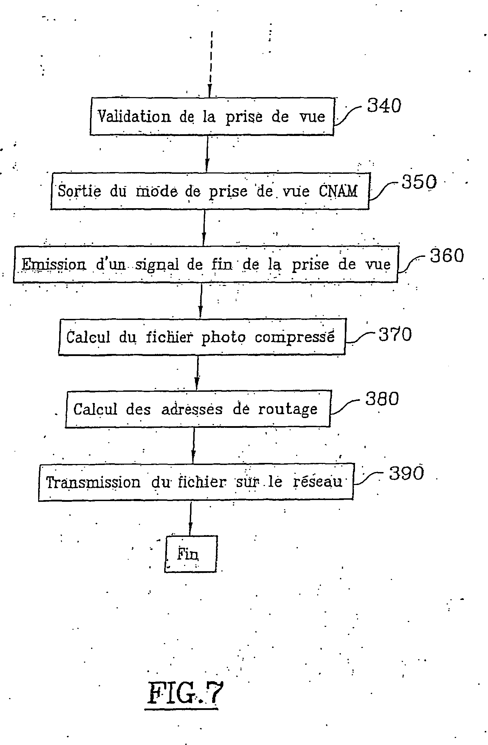

On va décrire maintenant le fonctionnement de la cabine de prise de vue, mettant en oeuvre un programme selon le procédé de l'invention, appliqué à la réalisation de la carte santé à l'appui de l'organigramme des figures 6 et 7.

L'assuré se rend dans une cabine automatique 22, la prise de vue en libre service comporte une étape de paiement 250 par les moyens spécifiques de paiement de la cabine 40. Lorsque le paiement est effectué, le logiciel spécifique à l'invention pour cette application se branche à l'étape 260.

A cette étape, le programme propose selon un choix entre le mode normal de la cabine de prise de vue automatique e.n libre service et un mode santé spécifique pour une caisse d'assurance maladie. En cas de sélection du mode normal, le logiciel se branche sur ce mode à l'étape 270, et dans le cas contraire, il se branche à l'étape 280 en mode santé, et passe. à l'étape suivante 290.

A cette étape et en mode santé donc, le logiciel demande à l'assuré de rentrer son numéro d'identification par exemple d'assuré social, un message correspondant étant envoyé par exemple sur le moniteur 45 de la cabine. L'assuré introduit alors son numéro à l'aide du clavier numérique 38 valide la saisie et le programme se branche à l'étape de test 300.

A cette étape, un ordinateur central auquel sont reliés les moyens de prise de vue vérifie la cohérence des données. La cohérence des données peut également être vérifiée en local sur la base d'informations préalablement téléchargées par l'ordinateur central.

En absence de cohérence (branche non), un signal de refus est émis à destination de l'unité centrale 46 de la cabine et le programme de la cabine demande d'introduire un nouveau numéro et ainsi de suite selon une boucle entre l'étape 300 et 290. Dans le cas contraire (branche oui), l'ordinateur central émet un signal de validation (Si) et le programme se branche à l'étape 310.

A cette étape, le programme se met en mode prise de vue et suit des étapes 320 à 390 équivalentes aux étapes 130 à 200 de la figure 2.

L'étape de prise de vue et de saisie des données graphiques dans l'application du procédé à la personnalisation de carte santé, est alors terminée.

En ce qui concerne la remise de la carte de santé à l'assuré social, cela peut se faire sans contrôle, les cartes étant acheminées par courrier ou retirées sans formalité à la mairie ou à la poste du domicile de l'assuré.

Si l'on désire, effectuer un contrôle en vérifiant que le visage de la personne correspond bien à l'image imprimée sur La carte, il faut- qu'une personne habilitée, telle qu'un agent de la caisse d'assurance maladie, un postier ou un employé de mairie vérifie la photographie par rapport au titulaire.

On va d'écrire maintenant le fonctionnement d'une station de personnalisation grande série à l'appui à l'organigramme de la figure 4 et la figure 9.

La personnalisation en grande série illustrée par les étapes 220 à 225 est adaptée, par exemple, au renouvellement d'une pluralité de cartes d'abonnement longue durée telles des cartes bancaires, des cartes santé.

Dans ce cas, il est nécessaire de lancer une campagne de personnalisation, en effectuant un rappel des fichiers contenant au moins les données graphiques et d'associer ces données aux informations relatives à l'usage.

En variante, l'ensemble des données et informations peut être contenu dans un même fichier archivé dans des, moyens mémoire d'un ordinateur central d'un système de personnalisation décrit supra, ce fichier étant rappelé à l'aide de la donnée d'identification.

La personnalisation graphique et électrique et/ou magnétique est alors lancée à l'aide des moyens 11 à 14 décrits supra.

L'ordinateur ou le serveur 5a communique les données de chaque fichier au moyens ci-dessus pour confectionner chaque carte, par exemple un PSC. Les PSC sont ensuite conditionnés et acheminés vers l'usager par exemple par voie postale.

La campagne de personnalisation dans le cadre d'un renouvellement de cartes, est alors terminée.

Grâce à l'invention, on peut réduire considérablement les contraintes financières d'une autorité, notamment celles liées à l'investissement en station de prise de vue. En effet, le procédé de l'invention peut être facilement mis en oeuvre et à moindre coût à partir de cabines de prise de vue existantes conformes à celle décrite dans la demande de brevet français 92 0404, illustrée aux figures 12 et 13 et adaptée conformément à l'invention.

Avantageusement, ces cabines peuvent accueillir plusieurs modes de fonctionnement spécifiques (i, j...n) propres à plusieurs autorités en plus de leur mode de fonctionnement normal (figure 11) pour un fonctionnement multicarte. Elle comprend à cet effet des moyens de sélection de la carte à obtenir, et du mode de fonctionnement / utilisation correspondant.

Cela implique d'avoir dans l'unité centrale de la cabine plusieurs logiciels spécifiques, plusieurs adresses de routage possibles (Ri, Rj,...Rn) correspondant chacune à une autorité. L'unité mémoire de la station de personnalisation ou, d'un ordinateur central (figure 12), comporte quant à elle plusieurs logiciels d'attribution d'une donnée d'identification (Ai, Aj, ...An), plusieurs logiciels de contrôle du droit à la réalisation d*'*une photographie numérique (Ti, Tj,...Tn), éventuellement plusieurs signaux d'autorisation et/ou de déclenchement (Si, Sj..Sn) et plusieurs programmes de rappel (RAi, RAj...RAn), (Rvi, RVj... RVn).

Les moyens de sélection peuvent être constitués par tout moyen connu tel qu'un affichage des différents modes sur un écran sous forme d'un menu selon un programme dé sélection ou des touches correspondantes préétablies disposées sur un tableau de commande.

On remarque que la transformation multicarte d'une installation conçue pour une seule carte est très facile à effectuer puisque cette transformation consiste essentiellement en l'ajout des programmes ci-dessus en mémoire d'une unité centrale.

Ainsi, une autorité qui se doterait de l'installation ou qui posséderait déjà des cabines est en mesure de louer leur utilisation à d'autres autorités. Ce dernier point est particulièrement favorable à résoudre le problème de coût de mise en oeuvre du procédé.

Comme on l'a compris, l'invention vise principalement la réalisation de carte plastique avec mémoire; On peut également réaliser des cartes sans l'étape de personnalisation graphique, la photographie n'étant pas imprimée mais enregistrée dans la puce. Le contrôle visuel s'effectuerait comme indiqué ci-après.

De même, bien que l'invention vise principalement à empêcher la fraude pendant la réalisation de la carte; l'invention peut mettre en oeuvre des étapes connues ci-après visant à empêcher une falsification après ou parallèlement à la réalisation de la carte.

A cette fin, le procédé de réalisation peut comprendre en outre des étapes visant à crypter les données enregistrées dans-la puce, et/ou a créer un hologramme, et/ou à sécuriser les données. Les moyens à mettre en oeuvre pour réaliser une telle étape pris isolément sont connus de l'homme de l'art.

Le procédé peut comprendre également une étape visant à enregistrer dans la puce les données graphiques dé préférence sous forme compressée et/ou sous forme cryptée ou des indications relatives au visage de l'usager. L'autorité peut ainsi; par un contrôle à l'aide d'un lecteur approprié de type connu, décrypter la données graphiques et/ou les informations.

## Revendications

1. Procédé pour réaliser un titre d'usager personnalisé infalsifiable, autorisant un usage régi par une autorité, ledit titre étant constitué par une carte comportant une face munie d'une photographie du portrait de l'usager, et un support mémoire comportant au moins des informations relatives à l'usage, ledit procédé comprenant au moins les étapes suivantes consistant à :
saisir numériquement une prise de vue de données graphiques correspondant au visage de l'usager,
saisir numériquement au moins les informations relatives audit usage,
fournir une carte comportant une face et un support d'enregistrement,
personnaliser graphiquement ladite carte par impression graphique de ladite photographie sur la face de la carte à partir desdites données graphiques numériques, et
personnaliser électriquement la carte en enregistrant lesdites informations numériques dans ledit support, procédé dans lequel les étapes sont dissociées et dans lequel la mise en oeuvre d'une étape dissociée des autres étapes est soumise à contrôle ultérieur de l'autorité, **caractérisé en ce qu'**il comprend au moins une étape d'autorisation préalable dans laquelle une donnée d'identification est attribuée par l'autorité à l'usager, **en ce que** la prise de vue est effectuée par utilisation d'une cabine de prise de vue, au moins la prise de vue et la saisie des données graphiques numériques étant dissociées des autres étapes et effectuées sous le contrôle de l'usager moyennant l'utilisation de la donnée d'identification, la cabine de prise de vue comportant des moyens d'acquisition de la donnée d'identification les données graphiques étant mises à disposition de l'autorité par la cabine, et **en ce que** le contrôle indirect de l'autorité est au moins exercé grâce à l'association de la donnée d'identification avec les données graphiques.

2. Procédé selon la revendication 1, **caractérisé en ce que** l'attribution de la donnée d'identification est effectuée par la remise à l'usager par l'autorité d'une carte provisoire, d'un jeton ou d'un code.

3. Procédé selon l'une quelconque des revendications précédentes, **caractérisé en ce que**, dans un premier temps, on effectue la saisie des informations et leur enregistrement sur une carte provisoire, et dans un deuxième temps on réalise la saisie des données graphiques et leur impression sur la carte.

4. Procédé selon l'une quelconque des revendications précédentes, **caractérisé en ce que**, pour dissocier les étapes dans le temps, il comprend les étapes consistant à :
- associer la donnée d'identification aux données graphiques et/ou aux informations, et
- stocker au moins les données graphiques et les rappeler par le biais de cette donnée d'identification pour la personnalisation de la carte.

5. Procédé selon l'une quelconque des revendications précédentes, **caractérisé en ce que**, pour dissocier les étapes dans l'espace, il comprend les étapes consistant à :
- attribuer la donnée d'identification aux données graphiques et aux informations qui sont saisies sous cette donnée sur des sites distincts et éloignés l'un de l'autre, et à
- transmettre au moins les données graphiques à l'autorité et les rappeler par le biais de cette donnée d'identification pour la personnalisation de la carte.

6. Procédé l'une quelconque des revendications 4 à 5, **caractérisé en ce que** l'étape pour autoriser la prise de vue ou la saisie dès données graphiques comprend la communication de ladite donnée d'identification à l'autorité qui en vérifie la conformité.

7. Procédé selon la revendication 6, **caractérisé en ce que** l'autorisation déclenche un mode spécifique de prise de vue parmi plusieurs modes.

8. Procédé selon l'une quelconque des revendications 4 à 7, **caractérisé en ce que** ladite donnée d'identification comporte une donnée attribuée par l'autorité.

9. Procédé selon l'une quelconque des revendications 4 à 8, **caractérisé en ce que** ladite donnée d'identification comporte une donnée choisie par l'usager.

10. Procédé selon la revendication 8, **caractérisé en ce que** la donnée d'identification émanant de l'autorité est lue sur une carte provisoire.

11. Procédé selon la revendication 9, **caractérisé en ce que** la donnée d'identification de l'usager est communiquée à l'autorité par l'usager.

12. Procédé selon l'une quelconque des revendications précédentes, **caractérisé en ce qu'**il comporte une étape pour vérifier que le porteur est bien l'usager, étape dans laquelle au moins les données graphiques sont rappelées et visualisées de manière à les comparer avec le visage de l'usager, et conduisant à la réalisation d'une carte définitive eh cas de conformité

13. Procédé selon l'une quelconque des revendications précédentes, **caractérisé en ce que** ladite saisie' des données graphiques numériques s'effectue en libre service. automatiquement.

14. Procédé selon l'une quelconque des revendications précédentes, **caractérise en ce que** ladite saisie numérique des données graphiques est effectuée à partir d'une prise dé vue de données graphiques saisies sur un négatif ou un papier photographique.

15. Procédé selon l'une quelconque des revendications précédentes, **caractérisé en ce qu'**il comprend en outre une étape consistant à crypter les données enregistrées dans une puce, et/ou à créer un hologramme, et/ou à sécuriser les données.

16. Procédé selon l'une quelconque des revendications précédentes, **caractérisé en ce qu'**il comprend en outre une étape consistant à enregistrer dans une puce les données graphiques sous forme compressée et/ou sous forme cryptée.

17. Installation pour réaliser un titre d'usager personnalisé infalsifiable, autorisant un usage régi par une autorité, ledit titre étant constitué par une carte comportant une face munie d'une photographie du portrait de l'usager, et un support mémoire comportant au moins des informations relatives à l'usage, ladite installation comprenant :
au moins une station de prise de vue (3,4,22.,23,23a) comportant un moyen de saisie numérique de données graphiques (50, 42, 47),
au moins un moyen de saisie numérique des informations (16, 38),
au moins un moyen de stockage et de distribution de données (5a, 5b) ;
au moins un moyen d'impression (11, 29) pour personnaliser graphiquement ladite carte à partir desdites données graphiques numériques,
au moins un moyen d'enregistrement (12, 30) pour enregistrer lesdites informations dans ledit support,
au moins une unité centrale (7, 31) pour piloter lesdits moyens, cette installation étant apte à dissocier le fonctionnement / l'utilisation desdits moyens entre eux et à soumettre le fonctionnement / l'utilisation d'au moins un des moyens à contrôle ultérieur de l'autorité, **caractérisé en ce que** la station de prise de vue est une cabine de prise de vue permettant d'effectuer la prise de vue de manière dissociée des autres étapes sous le contrôle de l'usager, la cabine de prise de vue comportant des moyens d'acquisition d'une donnée d'identification attribuée par l'autorité à cet usager lors d'une étape d'autorisation préalable et permettant ainsi à l'autorité le contrôle indirect des données graphiques obtenues grâce à l'association des données graphiques avec ladite donnée d'identification.

18. Installation selon la revendication 16 **caractérisée en ce que**, pour dissocier dans le temps le fonctionnement / l'utilisation desdits moyens, elle est apte à associer la donnée d'identification aux données graphiques et/ou aux informations et stocker ces données graphiques et / ou informations dans les moyens de stockage et de distribution (5a, 5b) sous ladite donnée d'identification, lesdits moyens de stockage étant sous le contrôle de l'autorité, et à les rappeler par l'intermédiaire de ladite donnée par le biais d'un programme de rappel (RA).

19. Installation selon l'une quelconque des revendications 17 ou 18, **caractérisée en ce que**, pour dissocier dans l'espace le fonctionnement / l'utilisation desdits moyens, elle comporte une pluralité de stations de prise de vue décentralisées (3, 4, 23, 23a), chaque station étant apte à transmettre à distance au moins les données graphiques à au moins un moyen de stockage.

20. Installation selon les revendications 17 à 19, **caractérisée en ce que**, pour dissocier dans le contrôle le fonctionnement /l'utilisation desdits moyens, ladite station de prise de vue est adaptée à fonctionner en libre service partiellement sous le contrôle de l'usager.

21. Installation selon la revendication 19, **caractérisée en ce qu'**elle comporte en outre une pluralité de stations de personnalisation décentralisées (2a, 24, 24a) montées en réseau entre elles, chaque station de personnalisation comportant :
- un moyen de saisie d'informations,
- un moyen de stockage et de distribution de données,
- un moyen d'impression .pour imprimer les données graphiques sur ladite carte,
- un moyen d'enregistrement pour enregistrer lesdites informations dans ledit support,
- une interface de communication (8, 28) pour communiquer au moins avec une autre station de personnalisation, et
- une unité centrale (7a, 31) pour piloter lesdits moyens.

22. Installation selon l'une quelconque des revendications 17 à 21 **caractérisée en ce qu'**elle comprend une interface de communication (18, 49) et **en ce qu'**elle est apte à transmettre à distance les données graphiques.

23. Installation selon l'une quelconque des revendications 17 à 22, **caractérisée en ce que** l'unité centrale est adaptée pour fonctionner en libre service.

24. Installation selon l'une quelconque des revendications 17 à 23, **caractérisée en ce que** l'unité centrale comporte un programme (Ai) apte à attribuer une donnée d'identification pour les données graphiques et/ou lesdites informations.

25. Installation selon l'une quelconque des revendications 17 à 24, **caractérisée en ce que**, pour attribuer une donnée' d'identification, chaque station comporte un moyen de saisie d'information (16, 26, 27, 33, 38, 40, 41).

26. Installation selon la revendication 25, **caractérisée en ce que** ledit moyen de saisie est un clavier alphanumérique (10, 16, 33, 38) associé à une unité centrale (7a, 15b, 31, 46).

27. Installation selon la revendication 25, **caractérisée en ce que** ledit moyen de saisie est un lecteur de carte (26, 27, 40, 41) associé à une unité centrale (31,46).

28. Installation selon la revendication 26 **caractérisée en ce que** ledit lecteur est du type sans contact (41).

29. Installation selon l'une quelconque des revendications 17, à 28 **caractérisée en ce que** l'unité centrale comporte un programme de contrôle (Ti) apte à vérifier la conformité de la donnée d'identification et à autoriser la saisie des données graphiques en cas de conformité.

30. Installation selon la revendication 29, **caractérisée en ce que** le programme de contrôle (Ti) déclenche un mode de prise de vue spécifique (i) parmi plusieurs modes (i, j...n) par le biais d'un signal (Si).

31. Installation selon l'une quelconque des revendications 17 à 30, **caractérisée en ce que** chaque station comporte un moyen de compression de données (17, 35).

32. Installation selon l'une quelconque des revendications 17 à 31 combinée à la revendication 20, **caractérisée en ce que** chaque station comporte un moniteur (34, 45) relié au moyen de stockage (5a, 5b), et **en ce que** ledit programme de rappel (RA) comporte une étape (RV) consistant à visualiser au moins les données graphiques sur le moniteur.

33. Installation selon l'une quelconque des revendications 17 à 32 combinée à la revendication 23, **caractérisée en ce qu'**elle comporte un serveur (5a, 5b) monté en réseau avec chaque station de prise de vue et chaque station de personnalisation.

34. Installation selon l'une quelconque des revendications 17 à 33, **caractérisée en ce qu'**elle comporte en outre une station de personnalisation grande série (2a).

35. Installation selon l'une quelconque des revendications 17 à 34, **caractérisée en ce que** chaque station de prise de vue est disposée dans une cabine automatique en libre service (22).

36. Installation selon l' une quelconque des revendications 17 à 35 combinée à la revendication 23, **caractérisée en ce que** chaque station de prise de vue (23a) et chaque station de personnalisation (24a) sont disposées ensemble dans une cabine automatique en libre service (22).

37. Installation selon l'une quelconque des revendications 17 à 36 **caractérisée en ce que** la station comporte un scanner (50) apte à saisir une prise de vue tirée sur un négatif ou du papier photographique.

38. Installation selon l'une quelconque des revendications 17 à 37, **caractérisée en ce que** la station comprend plusieurs modes de fonctionnement spécifiques ( i, j,...n) pour un fonctionnement multicarte et des moyens de sélection de la carte à obtenir ainsi que du mode de fonctionnement / d'utilisation correspondant.

## Claims

1. A method for producing a non-forgeable personalised user document, allowing use governed by an authority, the said document being formed of a card comprising a aide bearing a photograph of the portrait of the user and a memory medium comprising at least the information relating to use, the said method comprising at least the following stages consisting in:
digitally entering a photograph of graphic data corresponding to the user's face,
digitally entering at least the information concerning such use,
providing a card comprising a side and a recording medium,
graphically personalising the said card by graphic printing of the said photograph on the side of the card from the said digital graphic data and
electrically personalising the card by recording the said digital data on the said medium,
a method in which the stages are separated and in which the implementation of a stage separate from the other stages is subject to a subsequent control by the authority, **characterised in that** it comprises at least one prior authorisation stage in which an item of identification data is assigned to the user by the authority, **in that** the photo is performed by using a photography booth, at least one photograph and entry of the digital graphic data being separated from the other stages and performed under the control of the user by means of use of the item of identification data, the photography booth comprising means of identification of the identification data, the graphic data being made available to the authority by the booth and **in that** indirect control by the authority is at least exercised by means of association of the element of identification data with the graphic data.

2. A method according to claim 1, **characterised in that** allocation of the element of identification data is performed by issue to the user by the authority of a temporary card, a token or a code.

3. A method according to any of the previous claims, **characterised in that**, firstly, the data are entered and recorded on a temporary card and secondly, the.graphic data are entered and printed on the card.

4. A method according to any of the previous claims, **characterised in that**, in order to separate the stages in time, it comprises the stages consisting in :
- associating the element of identification data with the graphic data and/or information and
- at least storing the graphic data and calling the latter up via this element of identification data for personalisation of the card.

5. A method according to any of the previous claims, **characterised in that**, in order to separate the stages in space, it comprises the stages consisting in:
- assigning the element of identification data to the graphic data and to the information entered under this element of data on the different sites separated from one another and
- transmitting at least the graphic data to the authority and calling the latter up by means of this element of identification data for personalisation of the card.

6. A method according to any of claims 4 to 5, **characterised in that** the stage for authorisation of taking of the photograph or entry of the graphic data comprises communication of the said element of identification data to the authority which verifies its conformity.

7. A method according to claim 6, **characterised by** the fact that the authorisation initiates a specific method of photography among several methods.

8. A method according to any of claims 4 to 7, **characterised in that** the said element of identification data comprises an element of data assigned by the authority.

9. A method according to any of claims to 8, **characterised in that** the said element of identification data comprises an element of data selected by the user.

10. A method according to claim 8, **characterised in that** the element of identification data derived from the authority is read on the temporary card.

11. A method according to claim 9, **characterised in that** the element of identification data of the user is communicated to the authority by the user.

12. A method according to any of the preceding claims, **characterised in that** it comprises a stage for checking that the bearer is indeed the user, a stage in which at least the graphic data are called up and visualised so as to compare these data with the user's face and resulting in production of a permanent card in case of conformity.

13. A method according to any of the preceding claims, **characterised in that** the said entry of the digital graphic data is performed automatically in self-service.

14. A method according to any of the preceding claims, **characterised in that** the said digital entry of the graphic data is performed based on a photograph of graphic data recorded on a negative or photographic paper.

15. A method according to any of the preceding claims, **characterised in that** it additionally comprises a stage consisting in encrypting the data recorded on a chip and/or in creating a hologram and/or in safeguarding the data.

16. A method according to any of the preceding claims, **characterised in that** it additionally comprises a stage consisting in recording the graphic data on a chip in compressed form and/or in encrypted form.

17. An installation for producing a non-forgeable personalised user document, allowing use governed by an authority, the said document being formed of a card comprising a side bearing a photograph of the portrait of the user and a memory medium comprising at least the information relating to use, the said installation comprising:
at least one photography station (3, 4, 22, 23, 23a) comprising a means of digital entry of graphic data (50, 42, 47),
at least a means of digital entry of the data (16, 38),
at least a means of data storage and distribution (5a, 5b);
at least a means of printing (11, 29) in order to graphically personalise the said card based on the said digital graphic data,
at least a means of recording (12, 30) for recording the said data on the said medium,
at least a central unit (7, 31) for piloting the said means,
this installation being capable of separating functioning / utilisation of the said means from one another and of submitting functioning / utilisation of at least one of the means to subsequent control by the authority, **characterised in that** the photography station is a photography station allowing the photograph to be taken separately from the other stages under the user's control, the photography booth comprising means of acquisition of an element of identification data assigned to this user by the authority during a prior authorisation stage and thereby allowing the authority indirect control of the graphic data obtained by means of association of the graphic data with the said element of identification data.

18. An installation according to claim 16, **characterised in that**, in order to separate functioning / utilisation of the said means in time, it is capable of associating the element of identification data with the graphic data and/or the information and of storing these graphic data and/or information in the storage and distribution media (5a, 5b) under the said element of identification data, the said storage media being under the control of the authority and of calling these up by means of the said element of data via a recall program (RA).

19. An installation according to any of claims 17 or 18, **characterised in that** in order to separate functioning / utilisation of the said means in space, it comprises a multiplicity of decentralised photography stations (3, 4, 23, 23a), each station being capable of remotely transmitting at least the graphic data by means of a storage medium.

20. An installation according to claims 17 to 19, **characterised in that** in order to separate functioning / utilisation of the said means in the control, the said photography station is capable of functioning in self-service partially under the user's control.

21. An installation according to claim 19, **characterised in that** it additional comprises a multiplicity of decentralised personalisation stations (2a, 24, 24a) networked among each other, each personalisation station comprising:
- a means of data entry,
- a means for storage and distribution of data,
- a means of printing for printing the graphic data on the said card,
- a means of recording in order to record the said data on the said medium,
- a communication interface (8, 28) in order to communicate at least with one other personalisation station and
- a central unit (7a, 31) for piloting the said means.

22. An installation according to any of claims 17 to 21, **characterised in that** it comprises a communication interface (18, 49) and **in that** it is capable of remotely transmitting the graphic data.

23. An installation according to any of claims 17 to 22, **characterised in that** the central unit is adapted for self-service operation.

24. An installation according to any of claim 17 to 23, **characterised in that** the central unit comprises a program (Ai) capable of allocating an element of identification data for the graphic data and/or the said data.

25. An installation according to any of claims 17 to 24, **characterised in that**, in order to allocate an element of identification data, each station comprises a means of entering data (16, 26, 27, 33, 38, 40, 41).

26. An installation according to claim 25, **characterised in that** the said means of entry is an alphanumerical keyboard (10, 16, 33, 38) associated with a central unit (7a, 15b, 31, 46).

27. An installation according to claim 25, **characterised in that** the said means of entry is a card reader (26, 27, 40, 41) associated with a central unit (31, 46).

28. An installation according to claim 26, **characterised in that** the said reader is of the contact-free type (41).

29. An installation according to any of claims 17 to 28, **characterised in that** the central unit comprises a control program (Ti) capable of verifying conformity of the element of identification data and of authorising entry of the graphic data in case of conformity.

30. An installation according to claim 29, **characterised in that** the control program (Ti) initiates a specific photographic method (i) among several methods (i, j...n) by means of a signal (Si).

31. An installation according to any of claims 17 to 30, **characterised in that** each station comprises a means of data compression (17, 35).

32. An installation according to any of claims 17 to 31 combined with claim 20, **characterised in that** each station comprises a monitor (34, 35) connected to the means of storage (5a, 5b) and **in that** the said recall program (RA) comprises a stage (RV) consisting in visualising at least the graphic data on the monitor.

33. An installation according to any of claims 17 to 32 combined with claim 23, **characterised in that** it comprises a server (5a, 5b) networked with each photography station and each personalisation station.

34. An installation according to any of claims 17 to 33, **characterised in that** it additionally comprises a major series personalisation station (2a).

35. An installation according to any of claims 17 to 34, **characterised in that** each photography station is arranged in an automatic self-service booth (22).

36. An installation according to any of claims 17 to 35 combined with claim 23, **characterised in that** each photography station (23a) and each personalisation station (24a) are both arranged in an automatic self-service station (22).

37. An installation according to any of claims 17 to 36 **characterised in that** the station comprises a scanner (50) capable of recording a photograph made on a negative or photographic paper.

38. An installation according to any of claims 17 to 37, **characterised in that** the station comprises several specific methods of functioning (i, j,...n) for multiple-card operation and means of selection of the card to be obtained in addition to the corresponding method of functioning / utilisation.

## Patentansprüche

1. Verfahren zur Herstellung eines personalisierten, fälschungssicheren Benutzerausweises, der zu einer behördlich genehmigten Benutzung berechtigt, wobei der erwähnte Ausweis aus einer Karte besteht, die eine Seite mit einem Passfoto des Benutzers und ein Speichermedium mit zumindest Informationen über die Benutzung enthält; das erwähnte Verfahren umfasst zumindest die folgenden Schritte, bestehend aus:
der digitalen Erfassung einer fotografischen Aufnahme grafischer Daten, die dem Gesicht des Benutzers entsprechen,
der digitalen Erfassung von zumindest den Informationen über die erwähnte Benutzung,
der Herstellung einer Karte mit einer Vorderseite und einem Speichermedium,
der grafischen Personalisierung der erwähnten Karte durch den grafischen Aufdruck des erwähnten Fotos auf der Vorderseite der Karte auf der Grundlage der erwähnten digitalen grafischen Daten, und
der elektrischen Personalisierung der Karte durch die Speicherung der erwähnten digitalen Informationen in dem erwähnten Medium,
bei dem Verfahren sind die einzelnen Schritte voneinander getrennt, und die Durchführung eines von den anderen Schritten getrennten Schrittes unterliegt einer späteren Kontrolle durch die Behörde, das Verfahren ist **dadurch gekennzeichnet, dass** es mindestens einen Schritt der vorherigen Genehmigung enthält, bei dem die Behörde dem Benutzer eine Kennung zuweist, dass die Aufnahme durch die Benutzung einer Fotoaufnahmekabine erfolgt; mindestens die Aufnahme des Fotos und die Erfassung der digitalen grafischen Daten sind von den anderen Schritten getrennt und erfolgen unter der Kontrolle des Benutzers mit Hilfe der Kennung, wobei die Aufnahmekabine über Mittel zur Erfassung der Kennungsdaten verfügt und die grafischen Daten der Behörde durch die Kabine zur Verfügung gestellt werden, und dass die indirekte Kontrolle der Behörde mindestens durch die Verknüpfung der Kennungsdaten mit den grafischen Daten erfolgt.

2. Verfahren gemäß Anspruch 1, **dadurch gekennzeichnet, dass** die Zuweisung der Kennung durch die Übergabe einer provisorischen Karte, einer Marke bzw. eines Codes durch die Behörde an den Benutzer erfolgt.

3. Verfahren gemäß einem der vorigen Ansprüche, **dadurch gekennzeichnet, dass** vorab die Erfassung der Informationen und ihre Speicherung auf einer provisorischen Karte erfolgt, und dass anschließend die grafischen Daten erfasst und auf der Karte aufgedruckt werden.

4. Verfahren gemäß einem der vorigen Ansprüche, **dadurch gekennzeichnet, dass** es zur zeitlichen Trennung der einzelnen Schritte folgende Schritte enthält:
- Verknüpfung der Kennungsdaten mit den grafischen Daten bzw. Informationen, und
- Speicherung mindestens der grafischen Daten und Abruf derselben durch diese Kennungsdaten zur Personalisierung der Karte.

5. Verfahren gemäß einem der vorigen Ansprüche, **dadurch gekennzeichnet, dass** es zur räumlichen Trennung der einzelnen Schritte folgende Schritte enthält:
- Zuordnung der Kennungsdaten zu den grafischen Daten und Informationen, die unter dieser Kennung an verschiedenen, räumlich getrennten Orten erfasst werden, und
- Übermittlung mindestens der grafischen Daten an die Behörde und Abruf derselben durch diese Kennung zur Personalisierung der Karte.

6. Verfahren gemäß einem der Ansprüche 4 und 5, **dadurch gekennzeichnet, dass** der Schritt zur Genehmigung der Aufnahme des Fotos bzw. der Erfassung der grafischen Daten die Übermittlung der Kennung an die Behörde beinhaltet, welche deren Echtheit prüft.

7. Verfahren gemäß Anspruch 6, **dadurch gekennzeichnet, dass** die Genehmigung die Auswahl eines bestimmten Aufnahmeverfahrens unter mehreren auslöst.

8. Verfahren gemäß einem der Ansprüche 4 bis 7, **dadurch gekennzeichnet, dass** die erwähnte Kennung von der Behörde erteilte Daten enthält.

9. Verfahren gemäß einem der Ansprüche 4 bis 8, **dadurch gekennzeichnet, dass** die erwähnte Kennung vom Benutzer ausgewählte Daten enthält.

10. Verfahren gemäß Anspruch 8, **dadurch gekennzeichnet, dass** die von der Behörde erteilte Kennung auf einer provisorischen Karte gelesen wird.

11. Verfahren gemäß Anspruch 9, **dadurch gekennzeichnet, dass** die vom Benutzer ausgewählten Daten der Kennung der Behörde vom Benutzer mitgeteilt werden.

12. Verfahren gemäß einem der vorigen Ansprüche, **dadurch gekennzeichnet, dass** es einen Schritt enthält, bei dem überprüft wird, ob der Inhaber tatsächlich der Benutzer ist und während dessen zumindest die grafischen Daten abgerufen und visualisiert werden, so dass sie mit dem Gesicht des Benutzers verglichen werden können; dieser Vergleich führt bei Übereinstimmung zur Anfertigung einer definitiven Karte.

13. Verfahren gemäß einem der vorigen Ansprüche, **dadurch gekennzeichnet, dass** die Erfassung der digitalen grafischen Daten automatisch in Selbstbedienung erfolgt.

14. Verfahren gemäß einem der vorigen Ansprüche, **dadurch gekennzeichnet, dass** die erwähnte digitale Erfassung der grafischen Daten ausgehend von einer Aufnahme grafischer Daten auf einem Negativ bzw. Fotopapier erfolgt.

15. Verfahren gemäß einem der vorigen Ansprüche, **dadurch gekennzeichnet, dass** es einen weiteren Schritt enthält, bei dem die aufgezeichneten Daten in einem Chip verschlüsselt werden, bzw. ein Hologramm erstellt wird, bzw. die Daten gesichert werden.

16. Verfahren gemäß einem der vorigen Ansprüche, **dadurch gekennzeichnet, dass** es einen weiteren Schritt enthält, bei dem die grafischen Daten in komprimierter bzw. verschlüsselter Form auf einem Chip gespeichert werden.

17. Einrichtung zur Herstellung eines personalisierten, fälschungssicheren Benutzerausweises, der zu einer behördlich genehmigten Benutzung berechtigt, wobei der erwähnte Ausweis aus einer Karte besteht, die eine Seite mit einem Passfoto des Benutzers und ein Speichermedium mit zumindest Informationen über die Benutzung enthält; die erwähnte Einrichtung besteht aus :
mindestens einer Fotoaufnahmestation (3, 4, 22, 23, 23a), ausgerüstet mit einem Mittel zur digitalen Erfassung grafischer Daten (50, 42, 47),
mindestens einem Mittel zur digitalen Erfassung der Informationen (16, 38)
mindestens einem Medium zur Speicherung und Übertragung von Daten (5a, 5b),
mindestens einem Druckmittel (11, 29) zur graphischen Personalisierung der erwähnten Karte mittels der erwähnten digitalen grafischen Daten,
mindestens einem Speichermittel (12, 30) zur Speicherung der erwähnten Informationen auf dem erwähnten Speichermedium,
mindestens einer Zentraleinheit (7, 31) zur Steuerung der erwähnten Mittel,
wobei diese Einrichtung in der Lage ist, die Funktion / die Benutzung der erwähnten Mittel voneinander zu trennen, und die Funktion / die Anwendung mindestens eines der erwähnten Mittel der späteren Kontrolle durch die Behörde zu unterstellen,
**dadurch gekennzeichnet, dass** die Fotoaufnahmestation aus einer Aufnahmekabine besteht ist, mittels derer die fotografische Aufnahme getrennt von den anderen Schritten unter der Kontrolle des Benutzers erfolgen kann, wobei diese Kabine mit Mitteln zur Erfassung der Kennung ausgestattet ist, die dem Benutzer von der Behörde in einem vorherigen Genehmigungsschritt zugewiesen wurde und der Behörde somit die indirekte Kontrolle der durch die Verknüpfung der grafischen Daten mit der Kennung erhaltenen grafischen Daten ermöglichen.

18. Einrichtung gemäß Anspruch 16, **dadurch gekennzeichnet, dass** sie zur zeitlichen Trennung der Funktion / der Benutzung der erwähnten Mittel in der Lage ist, die Kennung mit den grafischen Daten bzw. Informationen zu verknüpfen, und diese grafischen Daten bzw. Informationen auf den Speicher- und Übertragungsmitteln (5a, 5b) unter der erwähnten Kennung zu speichern, wobei die erwähnten Speichermittel unter der Kontrolle der Behörde steht, und sie mittels eines Abrufprogramms (RA) über die erwähnte Kennung abzurufen.

19. Einrichtung gemäß einem der Ansprüche 17 oder 18, **dadurch gekennzeichnet, dass** sie zur räumlichen Trennung der Funktion / der Benutzung der erwähnten Mittel über mehrere dezentral angeordnete Fotoaufnahmestationen verfügt (3, 4, 23, 23a), von denen jede in der Lage ist, zumindest die grafischen Daten an zumindest ein Speichermedium zu übertragen.

20. Einrichtung gemäß den Ansprüchen 17 bis 19, **dadurch gekennzeichnet, dass** zur Trennung der Funktion / der Benutzung der erwähnten Mittel bei der Kontrolle die erwähnte Fotoaufnahmestation in Selbstbedienung unter teilweiser Kontrolle des Benutzers funktioniert.

21. Einrichtung gemäß Anspruch 19, **dadurch gekennzeichnet, dass** sie des Weiteren mehrere dezentral angeordnete Personalisierungsstationen enthält (2a, 24, 24a), die untereinander vernetzt sind, wobei jede einzelne Personalisierungsstation Folgendes enthält:
- ein Mittel zur Erfassung von Informationen,
- ein Mittel zur Speicherung und Übertragung von Daten,
- ein Druckmittel zum Drucken der grafischen Daten auf die erwähnte Karte,
- ein Speichermittel zur Speicherung der erwähnten Informationen auf dem erwähnten Speichermedium,
- eine Kommunikationsschnittstelle (8, 28) zur Verbindung mit mindestens einer weiteren Personalisierungsstation, und
- eine zentraleinheit zur Steuerung (7a, 31) der erwähnten Mittel.

22. Einrichtung gemäß den Ansprüchen 17 bis 21, **dadurch gekennzeichnet, dass** sie eine Kommunikationsschnittstelle (18, 49) enthält, und **dadurch**, dass sie in der Lage ist, die grafischen Daten auf Entfernung zu übertragen.

23. Einrichtung gemäß den Ansprüchen 17 bis 22, **dadurch gekennzeichnet, dass** die Zentraleinheit dazu geeignet ist, in Selbstbedienung zu funktionieren.

24. Einrichtung gemäß den Ansprüchen 17 bis 23, **dadurch gekennzeichnet, dass** die Zentraleinheit zur Steuerung ein Programm enthält (Ai), das in der Lage ist, den grafischen Daten bzw. Informationen eine Kennung zuzuordnen.

25. Einrichtung gemäß den Ansprüchen 17 bis 24, **dadurch gekennzeichnet, dass** jede Station zur Zuordnung einer Kennung über ein Mittel zur Erfassung von Informationen (16, 26, 27, 33, 38, 40, 41) verfügt,

26. Einrichtung gemäß Anspruch 25, **dadurch gekennzeichnet, dass** das erwähnte Erfassungsmittel aus einer alphanumerischen Tastatur (10, 16, 33, 38) in Verbindung mit einer Zentraleinheit (7a, 15b, 31, 46) besteht.

27. Einrichtung gemäß Anspruch 25, **dadurch gekennzeichnet, dass** das erwähnte Erfassungsmittel aus einem Kartenlesegerät (26, 27, 40, 41) in Verbindung mit einer Zentraleinheit (31, 46) besteht.

28. Einrichtung gemäß Anspruch 26, **dadurch gekennzeichnet, dass** das erwähnte Lesegerät kontaktlos (41) funktioniert.

29. Einrichtung gemäß den Ansprüchen 17 bis 28, **dadurch gekennzeichnet, dass** die zentraleinheit ein Kontrollprogramm (Ti) enthält, das in der Lage ist, die Übereinstimmung der Kennung zu überprüfen und im Fall von Übereinstimmung die Erfassung der grafischen Daten freizugeben.

30. Einrichtung gemäß Anspruch 29, **dadurch gekennzeichnet, dass** das Kontrollprogramm (Ti) über ein Signal (Si) einen spezifischen Aufnahmemodus (i) von mehreren Modi (i, j...n) auslöst.

31. Einrichtung gemäß den Ansprüchen 17 bis 30, **dadurch gekennzeichnet, dass** jede Station ein Mittel zur Datenkomprimierung (17, 35) enthält.

32. Einrichtung gemäß den Ansprüchen 17 bis 31 in Verbindung mit Anspruch 20, **dadurch gekennzeichnet, dass** jede Station einen Monitor (34, 45) enthält, der mit dem Speichermittel (5a, 5b) verbunden ist, und dass das erwähnte Abrufprogramm (RA) eine Stufe (RV) enthält, bei der zumindest die grafischen Daten auf dem Monitor angezeigt werden.

33. Einrichtung gemäß den Ansprüchen 17 bis 32 in Verbindung mit Anspruch 23, **dadurch gekennzeichnet, dass** sie einen Server enthält (5a, 5b), der mit allen Fotoaufnahme- und Personalisierungsstationen vernetzt ist.

34. Einrichtung gemäß den Ansprüchen 17 bis 33, **dadurch gekennzeichnet, dass** sie des Weiteren eine Großserien-Personalisierungsstation (2a) enthält.

35. Einrichtung gemäß den Ansprüchen 17 bis 34, **dadurch gekennzeichnet, dass** alle Fotoaufnahmestationen in einer automatischen Kabine mit Selbstbedienung (22) untergebracht sind.

36. Einrichtung gemäß den Ansprüchen 17 bis 35 in Verbindung mit Anspruch 23, **dadurch gekennzeichnet, dass** alle Fotoaufnahmestationen (23a) und alle Personalisierungsstationen (24a) zusammen in einer automatischen Kabine mit Selbstbedienung (22) untergebracht sind.

37. Einrichtung gemäß den Ansprüchen 17 bis 36, **dadurch gekennzeichnet, dass** die Station einen Scanner (50) enthält, der in der Lage ist, eine Aufnahme zu erfassen, die auf einem Negativ oder Photopapier abgezogen ist.

38. Einrichtung gemäß den Ansprüchen 17 bis 37, **dadurch gekennzeichnet, dass** die Station über mehrere spezifische Funktionsweisen (i, j...n) für eine Mehrkartenfunktion und Mittel zur Auswahl der anzufertigenden Karte sowie der entsprechenden Betriebsweise / Benutzungsweise verfügt.
